# EUROPÄISCHE PATENTSCHRIFT

(11) **EP 4 098 527 B1**
(45) Veröffentlichungstag und Bekanntmachung des Hinweises auf die Patenterteilung: **16.04.2025**
(21) Anmeldenummer: 22174534.2
(22) Anmeldetag: 20.05.2022
(51) Int. Cl.: B62H 5/14, B62H 5/00

(54) **RAHMENSCHLOSS**
FRAME LOCK
SERRURE EN CHÂSSIS

(30) Priorität: 01.06.2021 DE 102021114209
(43) Veröffentlichungstag der Anmeldung: 07.12.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 1 418 302
- DE-A1- 102015 103 170

## Beschreibung

Die Erfindung betrifft ein Rahmenschloss für ein Zweirad. Ein Rahmenschloss mit den Merkmalen des Oberbegriffs des Anspruchs 1 ist beispielsweise aus DE 10 2015 103 170 A1 bekannt.

Von mobilen Zweiradschlössern unterscheiden sich Rahmenschlösser typischerweise dadurch, dass sie fest und in der Regel dauerhaft mit dem Rahmen des Zweirads verbunden, beispielsweise an dem Rahmen angeschraubt, sind. Das Rahmenschloss wird dabei derart angeordnet, dass ein Bügel des Rahmenschlosses wahlweise in eine Stellung verstellt werden kann, in der er zwischen die Speichen eines Rades des Zweirads eingreift, um ein Fahren mit dem Zweirad auf diese Weise zu verhindern. In dieser Stellung wird der Bügel zweckmäßigerweise durch einen Riegel des Rahmenschlosses gesichert, der sich zumindest idealerweise ausschließlich über einen Schließzylinder oder eine sonstige Schließeinrichtung des Rahmenschlosses verstellen lässt, zu deren Betätigung ein Nutzer über ein Schließgeheimnis, wie etwa einen Schlüssel, verfügen muss. Typische Bauformen für den Bügel sind einerseits eine Ausbildung als Schwenkbügel mit geradem Verlauf und andererseits eine Ausbildung als Drehbügel mit kreisbogenförmigem Verlauf.

Insbesondere kann ein Rahmenschloss für ein Zweirad einen Schlosskörper sowie einen Drehbügel umfassen, der sich längs einer Kreisbahn erstreckt und relativ zu dem Schlosskörper entlang der Kreisbahn zwischen einer Offenstellung, in der er ein Rad des Zweirads für eine Drehung freigibt, und einer Geschlossenstellung, in der er das Rad gegen Drehung sperrt, verstellbar ist. Dabei kann das Rahmenschloss ferner einen Riegel umfassen, der zwischen einer Entriegelungsstellung und einer Verriegelungsstellung verstellbar ist, wobei der Riegel, wenn sich der Drehbügel in seiner Geschlossenstellung befindet und sich der Riegel in seiner Verriegelungsstellung befindet, den Drehbügel gegen ein Verstellen in die Offenstellung sperrt.

Im geschlossenen Zustand eines solchen Rahmenschlosses, also wenn sich der Drehbügel in seiner Geschlossenstellung befindet, ist ein Rad des Zweirads, an dem das Rahmenschloss vorgesehen ist, gegen Drehung gesperrt, so dass ein Fahren mit dem Zweirad ausgeschlossen ist. Durch den Drehbügel kann das Zweirad jedoch in der Regel nicht an einem bestimmten Ort gesichert werden, also verhindert werden, dass das Zweirad von diesem Ort auf andere Weise als durch Fahren, z.B. durch Wegtragen, entfernt wird. Um das Zweirad auch diesbezüglich zu sichern, kann als Teil des Rahmenschlosses oder als Zubehörteil für das Rahmenschloss eine Sicherungskette, ein Sicherungskabel oder ein sonstiges, insbesondere länglich-strangförmiges, Sicherungselement vorgesehen sein, das mit dem Rahmenschloss fest verbunden werden kann. Mittels eines solchen Sicherungselements kann das Rahmenschloss (und über das Rahmenschloss somit auch das Zweirad) dann an einem stationären Gegenstand, wie etwa einer Straßenlaterne oder einem Zweiradständer, angeschlossen werden. Zur Befestigung des Sicherungselements an dem Rahmenschloss kann das Sicherungselement, insbesondere an einem Ende seiner länglichen Strangform, einen Kloben aufweisen und kann an dem Schlosskörper des Rahmenschlosses eine Klobenaufnahme ausgebildet sein, in welcher der Kloben aufgenommen und verriegelt werden kann.

Somit können in einem einzelnen Rahmenschloss zwei Sperrmechanismen kombiniert werden, wobei es für eine einfache Handhabung des Rahmenschlosses vorteilhaft ist, wenn sich beide Sperrmechanismen in koordinierter Weise betätigen lassen. Insbesondere kann die Handhabung dadurch verbessert werden, dass sich der Drehbügel und der Kloben gemeinsam, vorzugsweise mittels derselben Schließeinrichtung, entriegeln lassen. Denn typischerweise soll, etwa vor einer Fahrt mit dem Zweirad, nicht lediglich einer der beiden Sperrmechanismen gelöst werden, sondern es sollen beide gelöst werden. Bei einem Abschließen des Zweirads kann es für die Handhabung des Rahmenschlosses einfacher sein, beispielsweise zunächst den Kloben in die Klobenaufnahme einzustecken und erst anschließend den Drehbügel in seine Geschlossenstellung zu verstellen. Ein anschließendes Verriegeln des Drehbügels und des Klobens kann dann aber wiederum gleichzeitig erfolgen.

Zu einer komfortablen Nutzung des Rahmenschlosses kann ferner die Möglichkeit beitragen, den Kloben auch dann noch in die Klobenaufnahme einstecken zu können, wenn der Drehbügel bereits in seine Geschlossenstellung verstellt und in dieser Stellung verriegelt wurde ist, wobei der Kloben dann vorzugsweise automatisch beim Einstecken in der Klobenaufnahme ebenfalls verriegelt wird. Des Weiteren kann es vorteilhaft sein, wenn auch in der Offenstellung des Drehbügels die Möglichkeit besteht, dass der Kloben in die Klobenaufnahme eingesteckt werden kann und dann dort gegen ein Herausfallen aus der Klobenaufnahme bereits gehalten wird. Auf diese Weise kann ein Nutzer anschließend den Drehbügel in seine Geschlossenstellung verstellen und den Drehbügel und den Kloben dann gemeinsam verriegeln, ohne dabei weiter auf den Kloben achten zu müssen.

Für ein derartig koordiniertes Zusammenwirken der beiden Sperrmechanismen sind Kopplungen zwischen den Sperrmechanismen sowie unter Umständen zusätzliche Bauteile erforderlich, die zu einem erhöhten Raumbedarf führen können. Es wird aber grundsätzlich angestrebt, ein Rahmenschloss möglichst kompakt auszubilden. Zudem darf die verbesserte Handhabung durch das koordinierte Zusammenwirken der Sperrmechanismen die Sicherheit des Rahmenschlosses nicht beeinträchtigen.

Es ist eine Aufgabe der Erfindung, ein Rahmenschloss für ein Zweirad bereitzustellen, das einfach und flexibel verwendbar ist, dabei eine möglichst kompakte Bauform aufweist und zudem eine hohe Sicherheit bietet.

Die Aufgabe wird gelöst durch ein Rahmenschloss mit den Merkmalen des Anspruchs 1. Vorteilhafte Weiterbildungen der Erfindung ergeben sich aus den Unteransprüchen, der vorliegenden Beschreibung sowie den Figuren.

Das erfindungsgemäße Rahmenschloss für ein Zweirad umfasst: einen Schlosskörper, der sich von einem ersten Ende, an dem er eine Zylinderaufnahme aufweist, in eine Längsrichtung zu einem zweiten Ende, an dem er eine Klobenaufnahme aufweist, erstreckt und eine Drehbügelaufnahme aufweist; einen Drehbügel, der zumindest teilweise in der Drehbügelaufnahme aufgenommen ist und zwischen einer Offenstellung, in der er ein Rad des Zweirads für eine Drehung freigibt, und einer Geschlossenstellung, in der er das Rad gegen Drehung sperrt, verstellbar ist; einen Hauptriegel, der quer zur Längsrichtung zwischen einer Verriegelungsstellung, in der er zum Sperren des Drehbügels zumindest in dessen Geschlossenstellung mit einem Eingriffsabschnitt in die Drehbügelaufnahme eingreift, und einer Entriegelungsstellung, in der er den Drehbügel für ein Verstellen freigibt, linear verstellbar ist; eine Schließeinrichtung, die in der Zylinderaufnahme aufgenommen ist und einen Mitnehmer aufweist, über den sie derart mit dem Hauptriegel gekoppelt ist, dass der Hauptriegel über den Mitnehmer von der Schließeinrichtung in seine Entriegelungsstellung verstellbar ist; einen Klobenriegel, der quer zur Längsrichtung zwischen einer Verriegelungsstellung, in der er zum Sperren eines in die Klobenaufnahme aufgenommenen Klobens mit einem Eingriffsabschnitt in die Klobenaufnahme eingreift, und einer Entriegelungsstellung, in der er den Kloben für ein Verlassen der Klobenaufnahme freigibt, linear verstellbar ist; und eine Feder, die den Klobenriegel in Richtung seiner Verriegelungsstellung vorspannt; wobei ein Kopplungsabschnitt des Hauptriegels und ein Kopplungsabschnitt des Klobenriegels derart, insbesondere unmittelbar, miteinander gekoppelt sind, dass einerseits der Klobenriegel über den Hauptriegel von der Schließeinrichtung in seine Entriegelungsstellung verstellbar ist und andererseits der Hauptriegel über den Klobenriegel von der Feder in Richtung seiner Verriegelungsstellung vorgespannt ist.

Der Schlosskörper des Rahmenschlosses erstreckt sich erfindungsgemäß von seinem ersten Ende, an dem er die Zylinderaufnahme aufweist, in die Längsrichtung zu seinem zweiten Ende, an dem er die Klobenaufnahme aufweist. Bezüglich der Längsrichtung sind das erste Ende und das zweite Ende also entgegengesetzt zueinander ausgerichtet.

Insbesondere kann sich zumindest ein mittlerer, beispielsweise etwa quaderförmiger, Abschnitt des Schlosskörpers von dem ersten Ende bis zum zweiten Ende erstrecken. An den beiden genannten Enden kann der Schlosskörper bzw. dessen genannter mittlerer Abschnitt beispielsweise eine jeweilige Stirnseite aufweisen, wobei die beiden Stirnseiten insbesondere zumindest im Wesentlichen parallel zueinander und senkrecht zur genannten Längsrichtung ausgerichtet sein können.

Die genannte Erstreckung des Schlosskörpers schließt nicht aus, dass sich der Schlosskörper, insbesondere schräg zur Längsrichtung, über das erste Ende und/oder das zweite Ende hinaus erstrecken kann. Beispielsweise kann der Schlosskörper zwei kreisbogenförmige Schenkel aufweisen, die sich an dem ersten Ende bzw. an dem zweiten Ende aus einer jeweiligen Ecke der Quaderform des genannten mittleren Abschnitts des Schlosskörpers schräg zur Längsrichtung heraus erstrecken.

Die Zylinderaufnahme und die Klobenaufnahme erstrecken sich zweckmäßigerweise von außen in den Schlosskörper hinein, sind also - jedenfalls sofern keine Schließeinrichtung bzw. kein Kloben darin aufgenommen ist - von außen zugänglich. Vorzugsweise weisen sie dabei einen zur Längsrichtung parallelen Verlauf auf und erstrecken sich aufeinander zu. Insbesondere kann sich die Zylinderaufnahme von der genannten Stirnseite an dem ersten Ende des Schlosskörpers aus in den Schlosskörper hinein erstrecken und kann sich die Klobenaufnahme von der genannten Stirnseite an dem zweiten Ende des Schlosskörpers aus in den Schlosskörper hinein erstrecken.

Die Zylinderaufnahme und die Klobenaufnahme können jeweils zumindest im Wesentlichen eine Zylinderform und/oder einen kreisrunden Querschnitt aufweisen. Dabei ist eine Symmetrieachse der Zylinderaufnahme und/oder eine Symmetrieachse der Klobenaufnahme, die (jeweils) einer Zylinderachse der genannten Zylinderform entsprechen kann, vorzugsweise parallel zur Längsrichtung ausgerichtet. Die Zylinderaufnahme und die Klobenaufnahme können bezüglich ihrer jeweiligen Symmetrieachse koaxial zueinander angeordnet sein, wobei das nicht zwingend ist.

Die Zylinderaufnahme kann insbesondere dazu dienen, einen Schließzylinder aufzunehmen, ist aber trotz ihrer Bezeichnung nicht darauf eingeschränkt, sondern es kann auch eine sonstige Schließeinrichtung darin aufgenommen sein. Die Bezeichnung dient vielmehr der begrifflichen Unterscheidung von der Klobenaufnahme. Die Klobenaufnahme kann insbesondere dazu dienen, einen Kloben aufzunehmen, der zweckmäßigerweise an einem freien Ende eines mit dem Rahmenschloss verwendbaren oder als Teil des Rahmenschlosses vorgesehenen, insbesondere länglich-strangförmigen, Sicherungselements ausgebildet ist. Bei dem Sicherungselement kann es sich insbesondere um eine Sicherungskette oder ein Sicherungskabel handeln.

Der Schlosskörper weist ferner eine Drehbügelaufnahme auf. Der Drehbügel ist zumindest teilweise in der Drehbügelaufnahme aufgenommen und zwischen seiner Offenstellung, in der er ein Rad des Zweirads für eine Drehung freigibt, und seiner Geschlossenstellung, in der er das Rad gegen Drehung sperrt, verstellbar. Selbstverständlich kann der Drehbügel in seiner Geschlossenstellung das Rad eines jeweiligen Zweirads nur dann gegen Drehung sperren, wenn das Rahmenschloss in geeigneter Weise an dem Zweirad montiert ist. Mit anderen Worten: Das Rahmenschloss ist dazu ausgebildet, derart an dem Zweirad angeordnet zu werden, dass der Drehbügel in seiner Geschlossenstellung ein Rad des Zweirads gegen Drehung sperrt (insbesondere indem er das Rad durchgreift) und in seiner Offenstellung das Rad für eine Drehung freigibt.

Der Drehbügel kann sich insbesondere längs einer Kreisbahn erstrecken und dann entlang dieser Kreisbahn zwischen seiner Offenstellung und seiner Geschlossenstellung verstellbar sein. Ein Verstellen des Drehbügels entlang der Kreisbahn entspricht dann einem Drehen um eine Drehachse, die senkrecht zur Ebene der Kreisbahn (d.h. zur Ebene, innerhalb welcher die Kreisbahn liegt) durch den Mittelpunkt der Kreisbahn verläuft. Die Ebene der Kreisbahn ist vorzugsweise parallel zu der genannten Längsrichtung. Insbesondere kann eine Symmetrieachse der Zylinderaufnahme, eine Symmetrieachse der Klobenaufnahme und/oder eine Achse, bezüglich welcher die Zylinderaufnahme und die Klobenaufnahme koaxial zueinander sind, in dieser Ebene liegen.

Der Drehbügel kann je nach Drehstellung mit einem jeweiligen Teil seiner Erstreckung entlang der Kreisbahn in der Drehbügelaufnahme des Schlosskörpers aufgenommen sein. Beispielsweise kann der Drehbügel in seiner Offenstellung zumindest nahezu vollständig in der Drehbügelaufnahme aufgenommen sein, während er in seiner Geschlossenstellung mit einem Blockierabschnitt aus der Drehbügelaufnahme herausragt und zwischen den Speichen des jeweiligen Rads des Zweirads in das Rad eingreift, um dieses zu sperren. Die genannte Verstellbarkeit zwischen der Offenstellung und der Geschlossenstellung kann sich insbesondere aus der Lagerung des Drehbügels in der Drehbügelaufnahme ergeben.

Der Hauptriegel ist quer zur Längsrichtung zwischen der Verriegelungsstellung, in der er zum Sperren des Drehbügels zumindest in dessen Geschlossenstellung mit seinem Eingriffsabschnitt in die Drehbügelaufnahme eingreift, und der Entriegelungsstellung, in der er den Drehbügel für ein Verstellen freigibt, linear verstellbar.

Der Hauptriegel ist vorzugsweise vollständig innerhalb des Schlosskörpers angeordnet, um von außen nicht zugänglich zu sein. In die Drehbügelaufnahme kann der Hauptriegel insofern eingreifen, als er von außen (d.h. von außerhalb der Drehbügelaufnahme, jedoch innerhalb des Schlosskörpers) in die Drehbügelaufnahme hineinragt. Dadurch kann er insbesondere eine Sperrstruktur des in der Drehbügelaufnahme aufgenommenen Drehbügels derart hintergreifen, dass der Drehbügel dadurch gegen ein Verstellen gesperrt wird. In seiner Entriegelungsstellung greift der Hauptriegel dagegen nicht in die Drehbügelaufnahme ein oder jedenfalls nicht so weit, dass er den Drehbügel in einer jeweiligen Stellung sperrt.

Der Drehbügel kann insbesondere dazu ausgebildet sein, dass der in seine Verriegelungsstellung verstellte und somit in die Drehbügelaufnahme eingreifende Hauptriegel zumindest in der Geschlossenstellung des Drehbügels derart mit einer Sperrstruktur des Drehbügels zusammenwirken kann, dass der Drehbügel gegen ein Verlassen dieser Stellung gesperrt wird. Vorzugsweise ist der Drehbügel ferner dazu ausgebildet, dass der Hauptriegel auch in der Offenstellung des Drehbügels derart mit dessen Sperrstruktur zusammenwirken kann, dass der Drehbügel gegen ein Verlassen dieser Stellung gesperrt wird. Auf diese Weise kann der Drehbügel nicht nur in seiner Geschlossenstellung verriegelt werden, um ein Öffnen des Rahmenschlosses zu verhindern, sondern mittels des Hauptriegels auch in seiner Offenstellung gesichert werden, um ein versehentliches Schließen des Rahmenschlosses insbesondere bei der Fahrt ausschließen zu können.

Dass etwas linear verstellbar ist, meint insbesondere, dass ein solches Verstellen einem Versetzen entlang einer definierten geraden Richtung entspricht, also einem Versetzen in diese Richtung oder entgegengesetzt dazu um eine gerade Strecke. Bei einem linearen Verstellen kann es sich insbesondere um ein Parallelverschieben handeln. Vorzugsweise entspricht ein lineares Verstellen einer reinen Translation.

Die Richtung der linearen Verstellbarkeit des Hauptriegels ist quer zur Längsrichtung. Hierbei und auch im Folgenden meint "quer", dass die jeweiligen zwei quer zueinander angeordneten Elemente in einem Winkel zueinander ausgerichtet sind, der mindestens 45°, vorzugsweise mindestens 60°, insbesondere zumindest im Wesentlichen 90°, beträgt. Der Hauptriegel kann also insbesondere senkrecht zur Längsrichtung zwischen seiner Verriegelungsstellung und seiner Entriegelungsstellung linear verstellbar sein. Dabei kann die Richtung der linearen Verstellbarkeit beispielsweise zumindest im Wesentlichen radial bezüglich des Mittelpunkts der genannten Kreisbahn ausgerichtet sein, entlang welcher sich der Drehbügel erstreckt.

Die Schließeinrichtung ist in der Zylinderaufnahme aufgenommen und weist den Mitnehmer auf, über den sie derart mit dem Hauptriegel gekoppelt ist, dass der Hauptriegel über den Mitnehmer von der Schließeinrichtung in seiner Entriegelungsstellung verstellbar ist.

Bei der Schließeinrichtung kann es sich insbesondere um einen Schließzylinder handeln. Vorzugsweise kann die Schließeinrichtung ausschließlich mittels eines Schließgeheimnisses, beispielsweise in Form eines Schlüssels, betätigt werden. Das Betätigen der Schließeinrichtung kann insbesondere darin bestehen, dass die Schließeinrichtung zwischen einer Normalstellung und einer Freigabestellung verstellbar ist. Diese Stellungen können bei einer als Schließzylinder ausgebildeten Schließeinrichtung beispielsweise Drehstellungen eines Zylinderkerns des Schließzylinders entsprechen. Der in den Zylinderkern eingesteckte Schlüssel kann dann entsprechende Drehstellungen einnehmen.

Der genannte Mitnehmer ist vorzugsweise vollständig innerhalb des Schlosskörpers angeordnet, um von außen nicht zugänglich zu sein. Dabei kann der Mitnehmer als von der Schließeinrichtung separates Bauteil ausgebildet sein. Grundsätzlich kann der Mitnehmer aber auch in die Schließeinrichtung integriert sein und/oder durch einen Abschnitt der Schließeinrichtung gebildet werden.

Bei einem Betätigen der Schließeinrichtung wird der Mitnehmer vorzugsweise stets ebenfalls verstellt. Beispielsweise kann der Mitnehmer zu gemeinsamer Drehung mit dem Zylinderkern einer als Schließzylinder ausgebildeten Schließeinrichtung gekoppelt sein, so dass er jede Drehung des Zylinderkerns ebenfalls vollzieht und stets dieselbe Drehstellung wie der Zylinderkern aufweist.

Aufgrund der genannten Kopplung des Hauptriegels über den Mitnehmer mit der Schließeinrichtung kann der Hauptriegel durch Betätigung der Schließeinrichtung zumindest in seine Entriegelungsstellung verstellt werden. Es erfolgt dabei also eine Antriebsübertragung von der Schließeinrichtung über den Mitnehmer auf den Hauptriegel in Richtung von dessen Entriegelungsstellung. Insbesondere kann ein Verstellen der Schließeinrichtung aus der genannten Normalstellung in die genannte Freigabestellung aufgrund der Kopplung des Hauptriegels über den Mitnehmer mit der Schließeinrichtung zu einem Verstellen des Hauptriegels aus dessen Verriegelungsstellung in dessen Entriegelungsstellung abgeleitet werden.

Vorzugsweise sind die Schließeinrichtung und der Hauptriegel über den Mitnehmer zudem derart gekoppelt, dass der Hauptriegel über den Mitnehmer von der Schließeinrichtung auch in seine Verriegelungsstellung verstellbar ist. Eine derartige Kopplung ist aber nicht zwingend erforderlich, jedenfalls dann nicht, wenn der Hauptriegel in seine Verriegelungsstellung vorgespannt ist.

Ferner ist es bevorzugt, wenn die Kopplung der Schließeinrichtung über den Mitnehmer mit dem Hauptriegel derart ist, dass ein eindeutiger Zusammenhang zwischen einem jeweiligen Zustand bzw. einer jeweiligen Stellung der Schließeinrichtung (insbesondere einer jeweiligen Drehstellung des Zylinderkerns, falls die Schließeinrichtung als Schließzylinder ausgebildet ist) und einer jeweiligen Stellung des Hauptriegels besteht. Die Schließeinrichtung kann dann nicht verstellt werden, ohne dass zugleich auch der Hauptriegel verstellt wird, und umgekehrt.

Vorzugsweise sind die Schließeinrichtung und der Hauptriegel über den Mitnehmer direkt gekoppelt, d.h. dass an dieser antriebswirksamen Kopplung keine weiteren Elemente des Rahmenschlosses beteiligt sind. Insbesondere kann der Mitnehmer Teil der Schließeinrichtung sein oder von dieser unmittelbar beaufschlagt werden und seinerseits den Hauptriegel unmittelbar beaufschlagen. Der Hauptriegel ist dabei vorzugsweise einteilig ausgebildet. Auch der Mitnehmer kann, wenn er von der Schließeinrichtung separat ausgebildet ist, insbesondere einteilig ausgebildet sein.

Ferner ist neben der genannten Kopplung der Schließeinrichtung mit dem Hauptriegel über den Mitnehmer vorzugsweise keine sonstige antriebswirksame Kopplung zwischen der Schließeinrichtung und dem Hauptriegel vorgesehen.

Der Klobenriegel ist quer zur Längsrichtung zwischen der Verriegelungsstellung, in der er zum Sperren eines in die Klobenaufnahme aufgenommenen Klobens mit seinem Eingriffsabschnitt in die Klobenaufnahme eingreift, und der Entriegelungsstellung, in der er den Kloben für ein Verlassen der Klobenaufnahme freigibt, linear verstellbar.

Der Klobenriegel ist vorzugsweise vollständig innerhalb des Schlosskörpers angeordnet, um von außen nicht zugänglich zu sein. Zudem ist der Klobenriegel vorzugsweise einteilig ausgebildet. In die Klobenaufnahme kann der Klobenriegel insofern mit seinem Eingriffsabschnitt eingreifen, als der Eingriffsabschnitt von außen (d.h. von außerhalb der Klobenaufnahme, jedoch innerhalb des Schlosskörpers) in die Klobenaufnahme hineinragt. Dadurch kann der Eingriffsabschnitt insbesondere eine Sperrstruktur des in der Klobenaufnahme aufgenommenen Klobens, die beispielsweise eine an dem Kloben ausgebildete Ringnut umfassen kann, derart hintergreifen, dass der Kloben dadurch gegen ein Verlassen der Klobenaufnahme gesperrt wird. In seiner Entriegelungsstellung greift der Klobenriegel dagegen mit seinem Eingriffsabschnitt nicht in die Klobenaufnahme ein oder jedenfalls nicht so weit, dass er den Kloben gegen ein Verlassen der Klobenaufnahme sperrt.

Die Richtung der linearen Verstellbarkeit des Klobenriegels ist vorzugsweise senkrecht zur Längsrichtung und kann beispielsweise zumindest im Wesentlichen radial bezüglich des Mittelpunkts der genannten Kreisbahn ausgerichtet sein, entlang welcher sich der Drehbügel erstreckt. Insbesondere ist es bevorzugt, wenn die Richtung der linearen Verstellbarkeit des Klobenriegels parallel zur Richtung der linearen Verstellbarkeit des Hauptriegels ist.

Ähnlich wie der Hauptriegel weist auch der Klobenriegel eine Verriegelungsstellung und eine Entriegelungsstellung auf, wobei weder die beiden Verriegelungsstellungen des Klobenriegels und des Hauptriegels noch die beiden Entriegelungsstellungen des Klobenriegels und des Hauptriegels einander hinsichtlich ihrer Lage, des Maßes des Eingriffs in die jeweilige Aufnahme und/oder eines anderen Kriteriums entsprechen müssen. Insbesondere müssen sich der Hauptriegel und der Klobenriegel nicht zwangsläufig jeweils beide in ihrer jeweiligen Verriegelungsstellung oder in ihrer jeweiligen Entriegelungsstellung befinden. Zudem kann ein Verstellen des Hauptriegels in zumindest eine Richtung möglich sein, ohne dass dabei auch der Klobenriegel verstellt wird, und umgekehrt ein Verstellen des Klobenriegels in zumindest eine Richtung möglich sein, ohne dass dabei auch der Hauptriegel verstellt wird.

Die Feder spannt den Klobenriegel in Richtung seiner Verriegelungsstellung vor, also in diejenige Richtung, in die sich der Klobenriegel bei einem Verstellen aus seiner Entriegelungsstellung in seine Verriegelungsstellung bewegt. Insbesondere kann der Klobenriegel zumindest in seiner Entriegelungsstellung von der Feder in diese Richtung vorgespannt sein, also in diese Richtung beaufschlagt werden. Vorzugsweise liegt die Vorspannung auch in jeder Zwischenstellung zwischen der Entriegelungsstellung und der Verriegelungsstellung vor, so dass der Klobenriegel von der Feder bis in seine Verriegelungsstellung verstellt wird, sofern er nicht durch ein anderes Element, beispielsweise den Hauptriegel, zeitweise daran gehindert wird.

Bei der Feder kann es sich insbesondere um eine Schraubenfeder, vorzugsweise um eine Schraubendruckfeder, handeln. Vorzugsweise wird der Klobenriegel von der Feder unmittelbar beaufschlagt. Die Vorspannung wird dann also von der Feder durch unmittelbaren Kontakt zwischen der Feder und dem Klobenriegel auf den Klobenriegel übertragen. Vorzugsweise ist neben der genannten unmittelbaren Beaufschlagung des Klobenriegels durch die Feder keine sonstige antriebswirksame Kopplung zwischen der Feder und dem Hauptriegel vorgesehen. Zudem wirkt auf den Klobenriegel vorzugsweise keine andere Vorspannung (etwa durch eine weitere Feder), die den Klobenriegel in Richtung seiner Verriegelungsstellung vorspannt.

Erfindungsgemäß sind der Kopplungsabschnitt des Hauptriegels und der Kopplungsabschnitt des Klobenriegels derart, insbesondere unmittelbar, miteinander gekoppelt, dass einerseits der Klobenriegel über den Hauptriegel von der Schließeinrichtung in seine Entriegelungsstellung verstellbar ist und andererseits der Hauptriegel über den Klobenriegel von der Feder in Richtung seiner Verriegelungsstellung vorgespannt ist.

Mit anderen Worten: Durch die genannte Kopplung des Hauptriegels und des Klobenriegels miteinander sind auch einerseits die Schließeinrichtung und der Klobenriegel indirekt (nämlich über den Hauptriegel) miteinander gekoppelt und andererseits auch die Feder und der Hauptriegel indirekt (nämlich über den Klobenriegel) miteinander gekoppelt. Vorzugsweise sind dabei die Schließeinrichtung und der Klobenriegel ausschließlich indirekt (nämlich ausschließlich über den Hauptriegel) miteinander gekoppelt, so dass ein Kraftfluss zwischen der Schließeinrichtung und dem Klobenriegel zwingend über den Hauptriegel verläuft, und/oder die Feder und der Hauptriegel ausschließlich indirekt (nämlich ausschließlich über den Klobenriegel) miteinander gekoppelt, so dass ein Kraftfluss zwischen der Feder und dem Hauptriegel zwingend über den Klobenriegel verläuft. Es besteht dann also neben der Kopplung über den Hauptriegel keine an dem Hauptriegel vorbeiführende antriebswirksame Kopplung zwischen der Schließeinrichtung bzw. dem Mitnehmer und dem Klobenriegel und/oder es besteht neben der Kopplung über den Klobenriegel keine an dem Klobenriegel vorbeiführende antriebswirksame Kopplung zwischen der Feder und dem Hauptriegel.

Unter einer Kopplung ist in diesem Kontext zu verstehen, dass ein Antriebszusammenhang zwischen den beiden miteinander gekoppelten Elementen besteht, so dass zumindest bei einem Verstellen eines der beiden Elemente in eine Richtung dessen Bewegung direkt bzw. indirekt auf das andere Element übertragen wird, so dass auch dieses andere Element in eine jeweiligen Richtung verstellt wird.

Der Hauptriegel und der Klobenriegel können insbesondere dadurch in der genannten Weise miteinander gekoppelt sein, dass der Kopplungsabschnitt des Hauptriegels und der Kopplungsabschnitt des Klobenriegels einander gegenseitig beaufschlagen. Insbesondere kann dabei vorgesehen sein, dass der Kopplungsabschnitt des Hauptriegels den Kopplungsabschnitt des Klobenriegels beaufschlagt, wenn sich der Klobenriegel in seiner Verriegelungsstellung befindet und der Hauptriegel (von der Schließeinrichtung) aus seiner Verriegelungsstellung in seine Entriegelungsstellung verstellt wird, und umgekehrt der Kopplungsabschnitt des Klobenriegels den Kopplungsabschnitt des Hauptriegels beaufschlagt, wenn sich der Hauptriegel in seiner Entriegelungsstellung befindet und der Klobenriegel (von der Feder) aus seiner Entriegelungsstellung in seine Verriegelungsstellung verstellt wird.

Der Klobenriegel ist bei in die Klobenaufnahme aufgenommenem Kloben vorzugsweise ausschließlich mittels der Schließeinrichtung in seine Entriegelungsstellung verstellbar - nämlich über den Hauptriegel und zwar insbesondere dadurch, dass der Hauptriegel von der Schließeinrichtung in seine Entriegelungsstellung verstellt wird. In seine Verriegelungsstellung kann der Klobenriegel dagegen vorzugsweise durch die Vorspannung der Feder verstellt werden. Der Hauptriegel kann vorzugsweise sowohl mittels der Schließeinrichtung in seine Verriegelungsstellung verstellt werden als auch durch die Vorspannung der Feder - nämlich über den Klobenriegel - zumindest in Richtung seiner Verriegelungsstellung, insbesondere zumindest bis in eine Teilverriegelungsstellung, gegebenenfalls auch darüber hinaus bis in die Verriegelungsstellung, verstellt werden. In seine Entriegelungsstellung ist der Hauptriegel dagegen vorzugsweise ausschließlich mittels der Schließeinrichtung verstellbar.

Grundsätzlich kann das Rahmenschloss mehrere Federn zum Vorspannen des Klobenriegels bzw. des Hauptriegels umfassen. Vorzugsweise sind der Klobenriegel und der Hauptriegel allerdings ausschließlich durch die genannte Feder in Richtung ihrer jeweiligen Verriegelungsstellung vorgespannt, nämlich der Klobenriegel direkt und der Hauptriegel indirekt über den Klobenriegel. Wenn für das Vorspannen mehrere Federn vorgesehen sind, spannt jede dieser Federn den Klobenriegel vorzugsweise direkt, nämlich durch unmittelbare Beaufschlagung, vor und den Hauptriegel vorzugweise ausschließlich indirekt, nämlich über den Klobenriegel, vor.

Die beschriebene Art der Kopplung, welche die Schließeinrichtung, deren Mitnehmer, den Hauptriegel, den Klobenriegel und die Feder antriebswirksam miteinander verbindet, ermöglicht ein komfortables und die Handhabung des Rahmenschlosses vereinfachendes koordiniertes Zusammenwirken der beiden Sperrmechanismen des Rahmenschlosses, durch welche einerseits der Drehbügel und andererseits der Kloben eines zusätzlichen Sicherungselements verriegelt werden können. Die antriebswirksame Kopplung erstreckt sich dabei insgesamt entlang einer durch die genannten Elemente des Rahmenschlosses gebildete Antriebskette (von der Schließeinrichtung über den Mitnehmer, den Hauptriegel und den Klobenriegel bis zur Feder bzw. umgekehrt) ohne Verzweigung. Insbesondere dadurch wird eine besonders kompakte Anordnung dieser Elemente entlang der Längserstreckung des Schlosskörpers und somit eine besonders kompakte Bauform des gesamten Rahmenschlosses ermöglicht.

Gemäß einer vorteilhaften Ausführungsform weist der Klobenriegel bezüglich der Richtung seiner linearen Verstellbarkeit (d.h. bezüglich der Richtung, entlang welcher der Klobenriegel zwischen seiner Verriegelungsstellung und seiner Entriegelungsstellung linear verstellbar ist) einen Querschnitt mit einer U-Form auf.

Eine solche U-Form kann insbesondere durch einen mittleren Abschnitt, der einem Boden der U-Form entspricht, sowie zwei an entgegengesetzten Seiten daran angrenzenden Abschnitten gebildet werden, die einem jeweiligen Schenkel der U-Form entsprechen. Der mittlere Abschnitt kann dabei insbesondere zumindest im Wesentlichen senkrecht zu den beiden anderen Abschnitten ausgerichtet sein. Die Übergänge zwischen den Abschnitten können abgerundet sein. Außerdem kann der mittlere Abschnitt kürzer als die beiden anderen Abschnitte sein, die nicht unbedingt dieselbe Länge aufweisen müssen.

Grundsätzlich kann die U-Form noch zumindest einen weiteren Abschnitt umfassen, der sich an dem dem mittleren Abschnitt entgegengesetzten Ende eines jeweiligen der beiden Schenkel der U-Form anschließt, vorzugsweise aber eine geringere Länge als der jeweilige Schenkel aufweist. Dabei ist es bevorzugt, dass die U-Form höchstens einen solchen weiteren Abschnitt umfasst. Grundsätzlich kann der Klobenriegel aber auch mehr derartige weitere Abschnitte aufweisen.

Vorzugsweise sind die zwei Schenkel der U-Form quer, insbesondere senkrecht, zur genannten Längsrichtung verlaufend ausgerichtet. Der Boden der U-Form ist vorzugsweise parallel zur genannten Längsrichtung verlaufend ausgerichtet.

Gemäß einer weiteren vorteilhaften Ausführungsform ist der genannte Kopplungsabschnitt des Klobenriegels an einer ersten Seitenfläche des Klobenriegels ausgebildet und der genannte Eingriffsabschnitt des Klobenriegels an einer zweiten Seitenfläche des Klobenriegels ausgebildet, wobei der Klobenriegel eine dritte Seitenfläche aufweist, welche die erste Seitenfläche und die zweite Seitenfläche verbindet und an einer Innenwand des Schlosskörpers flächig anliegt.

Vorzugsweise weisen die drei genannten Seitenflächen des Klobenriegels eine Ausdehnung auf, die über die Materialstärke des Klobenriegels (die insbesondere der Dicke eines Blechs entsprechen kann, aus dem der Klobenriegel gebildet ist) hinausgeht und zwar insbesondere in alle zur jeweiligen Seitenfläche parallelen Richtungen. Dadurch unterscheiden sich die Seitenflächen insbesondere von Randflächen an Stirnseiten des Klobenriegels, deren Ausdehnung in eine zur jeweiligen Randfläche parallele Richtung gerade der Materialstärke des Klobenriegels entspricht und die daher eine wesentlich kleinere Ausdehnung als die Seitenflächen aufweisen. Entlang der Richtung der linearen Verstellbarkeit des Klobenriegels erstreckt sich jede der drei genannten Seitenflächen des Klobenriegels vorzugsweise über mehr als die Länge der Strecke, um die der Klobenriegel zwischen seiner Entriegelungsstellung und seiner Verriegelungsstellung verstellbar ist, insbesondere über mehr als das doppelte dieser Länge und/oder, insbesondere in jeder Stellung des Klobenriegels, über die Lage der genannten Symmetrieachse der Klobenaufnahme bezüglich dieser Richtung hinweg.

Die erste Seitenfläche, die zweite Seitenfläche und die dritte Seitenfläche können jeweils insbesondere parallel zur Richtung der linearen Verstellbarkeit des Klobenriegels ausgerichtet sein. Vorzugsweise sind die erste Seitenfläche und die zweite Seitenfläche dabei jeweils senkrecht zur Längsrichtung und somit parallel zueinander ausgerichtet. Die dritte Seitenfläche ist dagegen vorzugsweise parallel zur Längsrichtung ausgerichtet und kann somit insbesondere senkrecht zu den anderen beiden Seitenflächen ausgerichtet sein. Sofern der Klobenriegel die genannte U-Form aufweist, kann die erste Seitenfläche dem einen Schenkel der U-Form, die zweite Seitenfläche dem anderen Schenkel der U-Form und die dritte Seitenfläche dem Boden der U-Form entsprechen. Ein Klobenriegel mit derartigen Seitenflächen lässt sich insbesondere durch Stanzen und Umbiegen eines Blechs vergleichsweise einfach herstellen. Durch das Stanzen können insbesondere auch der Kopplungsabschnitt und der Eingriffsabschnitt des Klobenriegels ausgebildet sein.

Die genannte Innenwand kann insbesondere einer Innenseite einer Wand des Schlosskörpers entsprechen. Dabei kann die Wand Teil eines Gehäuses des Schlosskörpers sein, wobei dann eine Außenseite dieser Wand eine Außenseite des Schlosskörpers sein kann. Das ist aber nicht zwangsläufig der Fall. Vorzugsweise wird die Wand durch ein zusätzliches Schutzblech des Schlosskörpers gebildet, welches innerhalb eines Gehäuses des Schlosskörpers angeordnet ist.

Dadurch dass die dritte Seitenfläche an der genannten Innenwand des Schlosskörpers flächig anliegt, kann sie bei einem Verstellen des Klobenriegels auch flächig daran entlanggleiten. Das führt zu einer besonders stabilen Führung des Klobenriegels innerhalb des Schlosskörpers.

Gemäß einer weiteren vorteilhaften Ausführungsform weist der Hauptriegel bezüglich der Richtung seiner linearen Verstellbarkeit (d.h. Bezüglich der Richtung, entlang welcher der Hauptriegel zwischen seiner Verriegelungsstellung und seiner Entriegelungsstellung linear verstellbar ist) einen Querschnitt mit einer L-Form auf.

Eine solche L-Form kann insbesondere durch einen ersten Abschnitt, der einem ersten Schenkel der L-Form entspricht, sowie einen daran anschließenden und dazu senkrecht ausgerichteten zweiten Abschnitt gebildet werden, der einem zweiten Schenkel der L-Form entspricht. Der Übergang zwischen den Abschnitten kann abgerundet sein. Außerdem kann der zweite Abschnitt kürzer als der erste Abschnitt sein.

Grundsätzlich kann die L-Form noch zumindest einen weiteren Abschnitt umfassen, der sich an einen der beiden genannten Abschnitte der L-Form anschließt, vorzugsweise aber eine geringere Länge als dieser Abschnitt aufweist. Dabei ist es bevorzugt, dass die L-Form höchstens einen solchen weiteren Abschnitt umfasst. Grundsätzlich kann der Hauptriegel aber auch mehr derartige weitere Abschnitte aufweisen.

Vorzugsweise ist einer der beiden Schenkel, insbesondere der genannte erste Schenkel, der L-Form quer, insbesondere senkrecht, zur genannten Längsrichtung verlaufend ausgerichtet. Der andere der beiden Schenkel, insbesondere der genannte zweite Schenkel, der U-Form ist vorzugsweise parallel zur genannten Längsrichtung verlaufend ausgerichtet.

Gemäß einer weiteren vorteilhaften Ausführungsform sind der genannte Kopplungsabschnitt des Hauptriegels und der genannte Eingriffsabschnitt des Hauptriegels an einer ersten Seitenfläche des Hauptriegels ausgebildet, wobei der Hauptriegel eine zweite Seitenfläche aufweist, welche an die erste Seitenfläche angrenzt und an einer Innenwand des Schlosskörpers flächig anliegt.

Vorzugsweise weisen die genannten zwei Seitenflächen des Hauptriegels eine Ausdehnung auf, die über die Materialstärke des Hauptriegels (die insbesondere der Dicke eines Blechs entsprechen kann, aus dem der Hauptriegel gebildet ist) hinausgeht und zwar insbesondere in alle zur jeweiligen Seitenfläche parallelen Richtungen. Dadurch unterscheiden sich die Seitenflächen insbesondere von Randflächen an Stirnseiten des Hauptriegels, deren Ausdehnung in eine zur jeweiligen Randfläche parallele Richtung gerade der Materialstärke des Hauptriegels entspricht und die daher eine wesentlich kleinere Ausdehnung als die Seitenflächen aufweisen. Entlang der Richtung der linearen Verstellbarkeit des Hauptriegels erstreckt sich jede der zwei genannten Seitenflächen des Hauptriegels vorzugsweise über mehr als die Länge der Strecke, um die der Hauptriegel zwischen seiner Entriegelungsstellung und seiner Verriegelungsstellung verstellbar ist, insbesondere über mehr als das doppelte dieser Länge und/oder, insbesondere in jeder Stellung des Hauptriegels, über die Lage der genannten Symmetrieachse der Zylinderaufnahme bezüglich dieser Richtung hinweg.

Die erste Seitenfläche und die zweite Seitenfläche können jeweils insbesondere parallel zur Richtung der linearen Verstellbarkeit des Hauptriegels ausgerichtet sein. Vorzugsweise ist die erste Seitenfläche dabei senkrecht zur Längsrichtung ausgerichtet. Die zweite Seitenfläche ist dagegen vorzugsweise parallel zur Längsrichtung ausgerichtet und kann somit insbesondere senkrecht zur ersten Seitenfläche ausgerichtet sein. Sofern der Hauptriegel die genannte L-Form aufweist, kann die erste Seitenfläche dem ersten Schenkel der L-Form und die zweite Seitenfläche dem zweiten Schenkel der L-Form entsprechen. Ein Hauptriegel mit derartigen Seitenflächen lässt sich insbesondere durch Stanzen und Umbiegen eines Blechs vergleichsweise einfach herstellen. Durch das Stanzen können insbesondere auch der Kopplungsabschnitt und der Eingriffsabschnitt des Hauptriegels ausgebildet sein.

Die Innenwand, an welcher der Hauptriegel mit seiner zweiten Seitenfläche anliegt, kann insbesondere in entsprechender Weise wie die Innenwand, an welcher der Klobenriegel mit seiner dritten Seitenfläche anliegt, einer Innenseite einer Wand des Schlosskörpers entsprechen, wobei diese Wand durch ein innerhalb des Schlosskörpers angeordnetes Schutzblech gebildet werden kann. Insbesondere kann es sich in beiden Fällen um dieselbe Innenwand handeln.

Dadurch dass die zweite Seitenfläche an der genannten Innenwand des Schlosskörpers flächig anliegt, kann sie einem Verstellen des Hauptriegels auch flächig daran entlanggleiten. Das führt zu einer besonders stabilen Führung des Hauptriegels innerhalb des Schlosskörpers.

Gemäß einer vorteilhaften Ausführungsform sind die Richtung der linearen Verstellbarkeit des Hauptriegels und die Richtung der linearen Verstellbarkeit des Klobenriegels parallel zueinander. Das ermöglicht eine vergleichsweise einfache antriebswirksame Kopplung durch direkte gegenseitige Beaufschlagung der Kopplungsabschnitte des Hauptriegels und des Klobenriegels.

Gemäß einer weiteren vorteilhaften Ausführungsform ist die Feder in einer Querrichtung, die einerseits zur genannten Längsrichtung sowie andererseits zur Richtung der linearen Verstellbarkeit des Klobenriegels und/oder zur Richtung der linearen Verstellbarkeit des Hauptriegels senkrecht ist, benachbart zum Klobenriegel und/oder zum Hauptriegel angeordnet. Eine solche in die genannte Querrichtung zum Klobenriegel und/oder zum Hauptriegel benachbarte Anordnung der Feder trägt zu einer kompakten Bauform des Rahmenschlosses bei.

Insbesondere kann die Feder an einer in die genannte Querrichtung weisenden Seite des Schlosskörpers angeordnet sein und/oder sich entlang dieser Seite erstrecken. Beispielsweise kann sie bezüglich der Querrichtung zwischen dem Klobenriegel und/oder dem Hauptriegel einerseits und einer zur Querrichtung senkrechten Innenwand des Schlosskörpers andererseits angeordnet, insbesondere gefangen, sein. Diese Innenwand kann insbesondere einer Innenseite einer Wand des Schlosskörpers entsprechen, wobei die Wand Teil eines Gehäuses des Schlosskörpers sein kann. Ferner kann die Innenwand insbesondere zu der genannten Innenwand, an welcher die dritte Seitenfläche des Klobenriegels und/oder die zweite Seitenfläche des Hauptriegels flächig anliegt, entgegengesetzt angeordnet sein. Die Feder erstreckt sich entlang der genannten, in die Querrichtung weisenden Seite des Schlosskörpers bezüglich der Richtung der linearen Verstellbarkeit des Klobenriegels vorzugsweise über die Lage der genannten Symmetrieachse der Zylinderaufnahme und/oder der Klobenaufnahme hinweg. Dabei ist die Feder zweckmäßigerweise zumindest im Wesentlichen parallel zu dieser Richtung ausgerichtet. Grundsätzlich kann die Feder aber auch, zumindest geringfügig, schräg dazu ausgerichtet sein.

Gemäß einer weiteren vorteilhaften Ausführungsform ist die Feder, insbesondere bezüglich der Richtung, in der sie den Klobenriegel beaufschlagt, zumindest im Wesentlichen parallel zur Richtung der linearen Verstellbarkeit des Klobenriegels ausgerichtet. Eine Abweichung von einer zur Richtung der linearen Verstellbarkeit des Klobenriegels exakt parallelen Ausrichtung der Feder kann unter Umständen, insbesondere aus Bauraumgründen, erforderlich sein. Vorzugsweise weicht die Ausrichtung der Feder von der exakt parallelen Ausrichtung aber um höchstens 10°, insbesondere um höchstens 5°, ab. Auf diese Weise kann der Klobenriegel in Richtung seiner Verriegelungsstellung mit maximaler Kraft beaufschlagt werden. Außerdem trägt eine solche Ausrichtung der Feder noch zusätzlich zu einer kompakten Bauform des Rahmenschlosses bei.

Unabhängig von der Anordnung und Ausrichtung der Feder ist es außerdem jeweils bevorzugt, dass die Feder den Kopplungsabschnitt des Klobenriegels beaufschlagt. Der Kopplungsabschnitt des Klobenriegels dient dann nicht nur der antriebswirksamen Kopplung des Klobenriegels mit dem Hauptriegel, sondern auch der antriebswirksamen Kopplung des Klobenriegels mit der Feder, nämlich als Angriffspunkt für die Vorspannung des Klobenriegels durch die Feder. Insbesondere kann die Feder den Kopplungsabschnitt des Klobenriegels auf einer Seite dieses Kopplungsabschnitts beaufschlagen, die zu einer anderen Seite dieses Kopplungsabschnitts entgegengesetzt ist, an welcher dieser Kopplungsabschnitt von dem Kopplungsabschnitt des Hauptriegels beaufschlagt werden kann. Die Beaufschlagung des Kopplungsabschnitts des Klobenriegels durch die Feder ist vorzugsweise unmittelbar. Mit anderen Worten ist zwischen der Feder und dem Klobenriegel vorteilhafter Weise kein weiteres Bauteil vorgesehen, über welches die von der Feder ausgeübte Kraft auf den Klobenriegel übertragen wird und welches zusätzlichen Bauraum erfordern würde.

Gemäß einer weiteren vorteilhaften Ausführungsform wird der Kopplungsabschnitt des Klobenriegels durch einen an dem Klobenriegel ausgebildeten Vorsprung gebildet, der vorzugsweise quer zur genannten Längsrichtung und quer zur Richtung der linearen Verstellbarkeit des Klobenriegels von dem (übrigen) Klobenriegel vorsteht. Der Kopplungsabschnitt steht dabei insbesondere gegenüber einem oder mehreren an den Kopplungsabschnitt angrenzenden Abschnitten des Klobenriegels auf die genannte Weise vor. Dabei muss sich der Kopplungsabschnitt nicht unbedingt ausschließlich quer zur Längsrichtung und quer zur Richtung der linearen Verstellbarkeit des Klobenriegels erstrecken, sondern kann sich zumindest teilweise auch parallel zur Längsrichtung erstrecken, insbesondere um sich bis zum Kopplungsabschnitt des in Längsrichtung benachbarten Hauptriegels zu erstrecken. Hierzu kann der Kopplungsabschnitt des Klobenriegels beispielsweise entsprechend umgebogen sein.

Gemäß einer weiteren vorteilhaften Ausführungsform wird der Kopplungsabschnitt des Hauptriegels durch einen an dem Hauptriegel ausgebildeten Vorsprung gebildet, der vorzugsweise quer zur genannten Längsrichtung und quer zur Richtung der linearen Verstellbarkeit des Hauptriegels von dem (übrigen) Hauptriegel vorsteht. Der Kopplungsabschnitt steht dabei insbesondere gegenüber einem oder mehreren an den Kopplungsabschnitt angrenzenden Abschnitten des Hauptriegels auf die genannte Weise vor. Dabei muss sich der Kopplungsabschnitt nicht unbedingt ausschließlich quer zur Längsrichtung und quer zur Richtung der linearen Verstellbarkeit des Hauptriegels erstrecken, sondern kann sich zumindest teilweise auch parallel zur Längsrichtung erstrecken, insbesondere um sich bis zum Kopplungsabschnitt des in Längsrichtung benachbarten Hauptriegels zu erstrecken. Hierzu kann der Kopplungsabschnitt des Hauptriegels beispielsweise entsprechend umgebogen sein.

Gemäß einer weiteren vorteilhaften Ausführungsform liegen der Kopplungsabschnitt des Hauptriegels und der Kopplungsabschnitt des Klobenriegels aneinander an, wenn sich der Hauptriegel und der Klobenriegel in ihrer jeweiligen Entriegelungsstellung befinden. Insbesondere beaufschlagen sich die Kopplungsabschnitte dabei gegenseitig.

Der genannte Zustand kann insbesondere dadurch erreicht werden, dass der Hauptriegel mittels der Schließeinrichtung in seine Entriegelungsstellung verstellt wird und dabei durch das Zusammenwirken der beiden Kopplungsabschnitte den Klobenriegel in dessen Entriegelungsstellung verstellt. Der Klobenriegel wird dabei entgegen der Vorspannung der Feder verstellt, die ihn in Richtung seiner Verriegelungsstellung beaufschlagt und über das Zusammenwirken der beiden Kopplungsabschnitt indirekt auch den Hauptriegel in Richtung von dessen Verriegelungsstellung vorspannt. Gegen diese Vorspannung kann der Klobenriegel in seiner Entriegelungsstellung durch den Hauptriegel in dessen Entriegelungsstellung gehalten werden.

Gemäß einer weiteren vorteilhaften Ausführungsform liegen der Kopplungsabschnitt des Hauptriegels und der Kopplungsabschnitt des Klobenriegels aneinander an, wenn sich der Klobenriegel in seiner Verriegelungsstellung befindet und sich der Hauptriegel in einer Teilverriegelungsstellung zwischen seiner Entriegelungsstellung und seiner Verriegelungsstellung befindet. Insbesondere beaufschlagen sich die Kopplungsabschnitte dabei gegenseitig.

Der genannte Zustand kann insbesondere dadurch erreicht werden, dass der Klobenriegel von der Feder in seine Verriegelungsstellung verstellt wird und dabei durch das Zusammenwirken der beiden Kopplungsabschnitte den Hauptriegel in Richtung seiner Verriegelungsstellung verstellt. Grundsätzlich kann der Hub, also die Verstellstrecke zwischen der jeweiligen Entriegelungsstellung und der jeweiligen Verriegelungsstellung, für beide Riegel gleich sein, so dass der Hauptriegel dabei bis in seine Verriegelungsstellung verstellt wird und die beiden Kopplungsabschnitte dabei durchgehend aneinander anliegen. Bei der vorliegenden Ausführungsform weisen die beiden Riegel jedoch einen unterschiedlichen Hub auf, so dass der Hauptriegel durch das Verstellen des Klobenriegels in seine Verriegelungsstellung nur bis in die genannte Teilverriegelungsstellung verstellt wird. Insofern wird der Hauptriegel über den Klobenriegel von der Feder in diese Teilverriegelungsstellung vorgespannt.

Die Teilverriegelungsstellung kann dabei insbesondere etwa mittig zwischen der Verriegelungsstellung und der Entriegelungsstellung des Hauptriegels liegen. Beispielsweise kann die Länge der Verstellstrecke zwischen der Entriegelungsstellung und der Teilverriegelungsstellung mindestens 30%, vorzugsweise mindestens 40%, und/oder höchstens 70%, vorzugsweise höchstens 60%, der Länge der Verstellstrecke zwischen der Entriegelungsstellung und der Verriegelungsstellung des Hauptriegels betragen.

Vorzugsweise greift der Hauptriegel in der Teilverriegelungsstellung bereits teilweise mit seinem Eingriffsabschnitt in die Drehbügelaufnahme ein, insbesondere so weit, dass der Drehbügel dadurch bereits gegen ein Verlassen der Offenstellung in Richtung der Geschlossenstellung gesperrt wird. Der Hauptriegel mag dabei aufgrund des unvollständigen Eingreifens des Eingriffsabschnitts nicht mit derselben Zuverlässigkeit mit einer Sperrstruktur des Drehbügels sperrend zusammenwirken wie, wenn er sich in seiner Verriegelungsstellung befinden würde. Zumindest in der Offenstellung des Drehbügels kann das jedoch bereits dazu reichen, den Drehbügel gegen ein versehentliches Schließen zu sperren. In der Geschlossenstellung des Drehbügels hingegen muss die Sperrung auch Aufbruchsversuchen standhalten, so dass der Hauptriegel dann bevorzugt nicht lediglich in die Teilverriegelungsstellung, sondern darüber hinaus bis in die Verriegelungsstellung verstellt wird - wenn auch nicht durch die Vorspannung der Feder.

Insbesondere kann in der Offenstellung des Drehbügels die lineare Verstellbarkeit des Hauptriegels durch eine entsprechende Ausbildung des Drehbügels oder einer an dem Drehbügel angeordneten Abdeckung oder Leiste auf ein Verstellen zwischen der Entriegelungsstellung und der Teilverriegelungsstellung des Drehbügels beschränkt sein, so dass der Hauptriegel in der Offenstellung des Drehbügels gar nicht bis in die Verriegelungsstellung verstellt werden kann. Dadurch kann sich aufgrund der Kopplung des Hauptriegels über den Mitnehmer mit der Schließeinrichtung auch ein Verstellen der Schließeinrichtung in eine der Verriegelungsstellung des Hauptriegels entsprechende Normalstellung verhindern lassen. Wenn der Schlüssel nur in dieser Normalstellung von der Schließeinrichtung abgezogen werden kann, kann auf diese Weise einen Abziehen des Schlüssels in der Offenstellung des Drehbügels ausgeschlossen werden. Dies entspricht einer sogenannten Key-Retaining-Funktion, die insbesondere in manchen europäischen Ländern nachgefragt ist.

Die genannte Ausführungsform, bei welcher die Kopplungsabschnitte aneinander anliegen, wenn sich der Klobenriegel in seiner Verriegelungsstellung befindet und sich der Hauptriegel in seiner Teilverriegelungsstellung befindet, lässt eine solche Key-Retaining-Funktion zu, ohne das Rahmenschloss jedoch zwingend darauf festzulegen. Vielmehr ermöglicht diese Ausführungsform, dass durch Verwendung eines entsprechend ausgebildeten Drehbügels (oder eines Drehbügels mit entsprechend ausgebildeter Abdeckung oder Leiste) die Key-Retaining-Funktion wahlweise verwirklicht oder weggelassen werden kann.

Im Folgenden wird die Erfindung lediglich beispielhaft anhand der Figuren weiter erläutert.
- Fig. 1: zeigt eine Ausführungsform des erfindungsgemäßen Rahmenschlosses in einer Seitenansicht.
- Fig. 2: zeigt dasselbe Rahmenschloss aus entgegengesetzter Blickrichtung in einer Schnittdarstellung.
- Fig. 3: zeigt Teile des Rahmenschlosses in einem geschlossenen Zustand des Rahmenschlosses.
- Fig. 4: zeigt den Klobenriegel des Rahmenschlosses zusammen mit einem Kloben.
- Fig. 5: zeigt Teile des Rahmenschlosses in einem Zwischenzustand des Rahmenschlosses.
- Fig. 6: zeigt den Hauptriegel des Rahmenschlosses zusammen mit einem Ausschnitt des Drehbügels.
- Fig. 7: zeigt Teile des Rahmenschlosses in einem offenen Zustand des Rahmenschlosses.

In den Figuren ist eine Ausführungsform des erfindungsgemäßen Rahmenschlosses 11 dargestellt. Das Rahmenschloss 11 umfasst einen Schlosskörper 13 mit einem Gehäuse 15, das zumindest im Wesentlichen C-förmig ausgebildet ist, wobei ein mittlerer Abschnitt der C-Form quaderförmig verbreitert ist und die beiden übrigen Abschnitte einen ersten Schenkel 17 und einen zweiten Schenkel 19 des Schlosskörpers 13 bilden, die sich aus Ecken der Quaderform heraus erstrecken. Mit dem genannten mittleren Abschnitt erstreckt sich der Schlosskörper 13 entlang einer Längsrichtung L von einem ersten Ende 21 zu einem zweiten Ende 23, wobei der Schlosskörper 13 an beiden Enden 21, 23 jeweils eine zu der Längsrichtung L senkrecht ausgerichtete Stirnseite aufweist.

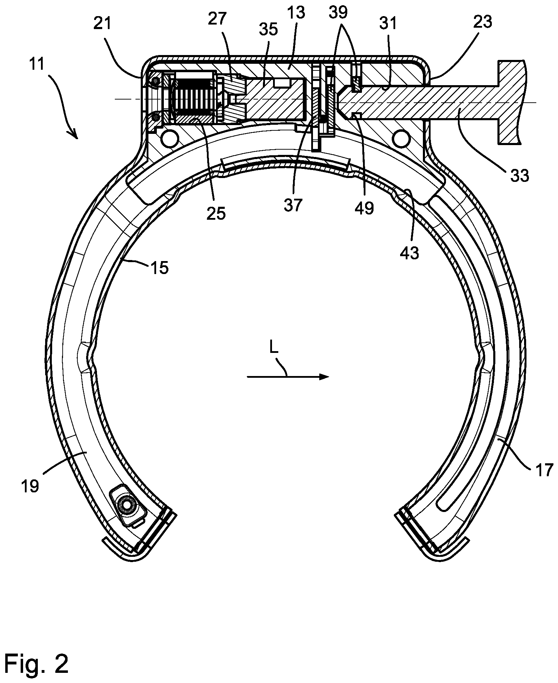

Wie insbesondere in der Schnittdarstellung der Fig. 2 zu erkennen ist, erstreckt sich von der Stirnseite am ersten Ende 21 aus eine Zylinderaufnahme 25 parallel zur Längsrichtung L in den Schlosskörper 13 hinein, in der eine Schließeinrichtung 27 in Form eines Schließzylinders aufgenommen ist. Die Schließeinrichtung 27 lässt sich nur mittels eines der Schließeinrichtung 27 zugeordneten Schlüssels 29 regulär betätigen, d.h. zwischen verschiedenen Drehstellungen eines Zylinderkerns der Schließeinrichtung 27 verstellen. Von der Stirnseite am zweiten Ende 23 aus erstreckt sich eine Klobenaufnahme 31 parallel zur Längsrichtung L in den Schlosskörper 13 hinein, in der ein Kloben 33 eines (nicht weiter dargestellten) länglich-strangförmigen Sicherungselements in Form einer Sicherungskette aufgenommen werden kann. Innerhalb des mittleren Abschnitts des Schlosskörpers 13 sind darüber hinaus ein Mitnehmer 35, ein Hauptriegel 37 sowie ein Klobenriegel 39 in dem Schlosskörper 13 aufgenommen.

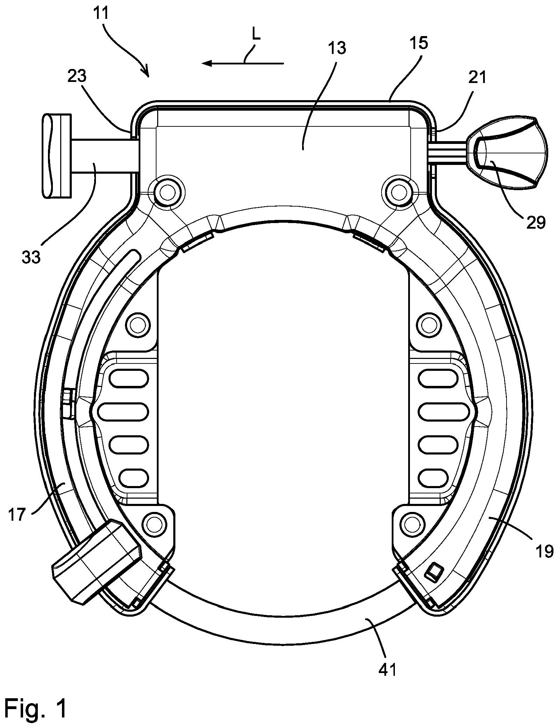

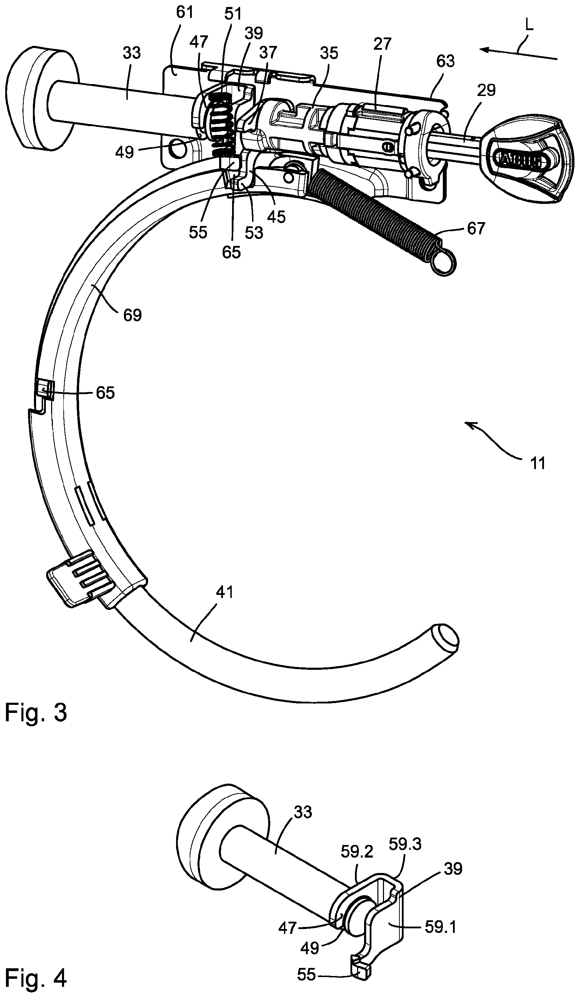

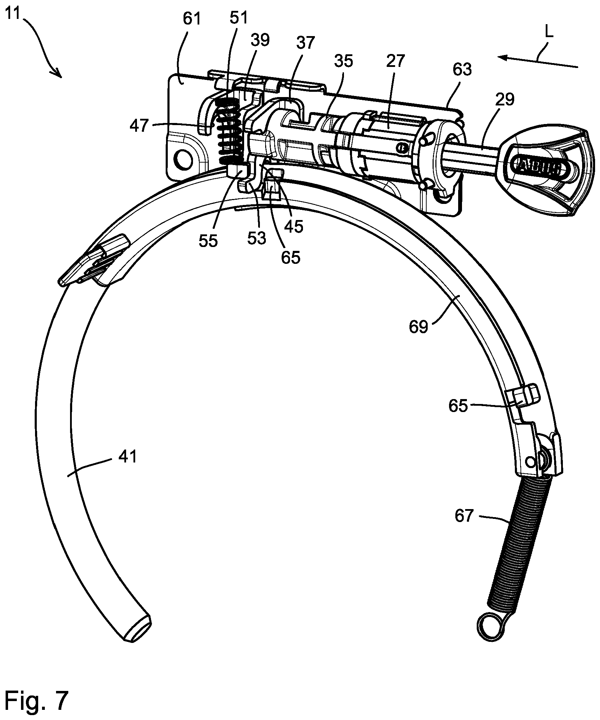

Das Rahmenschloss 11 weist ferner einen Drehbügel 41 auf, der sich längs einer Kreisbahn erstreckt und zumindest teilweise in dem Gehäuse 15, nämlich in einer Drehbügelaufnahme 43 (vgl. Fig. 2), die sich durch den ersten Schenkel 17, in den quaderförmigen mittleren Abschnitt des Schlosskörpers 13 und bis in den zweiten Schenkel 19 erstreckt, aufgenommen ist. Der Drehbügel 41 ist dabei relativ zu dem Schlosskörper 13 derart gelagert, dass er entlang seiner Längserstreckung, also entlang der genannten Kreisbahn, zwischen einer in den Fig. 1 und 3 gezeigten Geschlossenstellung und einer in Fig. 7 gezeigten Offenstellung verstellbar ist, nämlich um eine Drehachse drehbar ist, die senkrecht zur Ebene der Kreisbahn durch deren Mittelpunkt verläuft. Der Drehbügel 41 ist aus Metall und weist abschnittsweise einen konstanten Querschnitt auf, der kreisrund ist, grundsätzlich aber auch eine andere Form, beispielsweise die eines regelmäßigen Vielecks, aufweisen könnte.

In der Geschlossenstellung ragt der Drehbügel 41 aus dem ersten Schenkel 17 heraus und erstreckt sich bis zum zweiten Schenkel 19 und in diesen hinein, so dass er die beiden Schenkel 17, 19 verbindet und der Schlosskörper 13 und der Drehbügel 41 dadurch einen geschlossenen Ring bilden (vgl. Fig. 1). Auf diese Weise kann der Drehbügel 41 bei entsprechender Anordnung des Rahmenschlosses 11 an dem Rahmen eines Zweirads (nicht dargestellt) ein Rad des Zweirads zwischen dessen Speichen durchgreifen und das Rad somit gegen Drehung sperren.

In der Offenstellung dagegen ist der Drehbügel 41 zumindest im Wesentlichen vollständig innerhalb des Gehäuses 15 aufgenommen oder ragt nur geringfügig aus dem ersten Schenkel 17 des Gehäuses 15 heraus, so dass zwischen den beiden Schenkeln 17, 19 ein Freiraum verbleibt, innerhalb dessen die Speichen des Rades zwischen den Schenkeln 17, 19 des Rahmenschlosses 11 hindurch bewegt werden können. Somit gibt der Drehbügel 41 in seiner Offenstellung das Rad des Zweirads für eine Drehung frei.

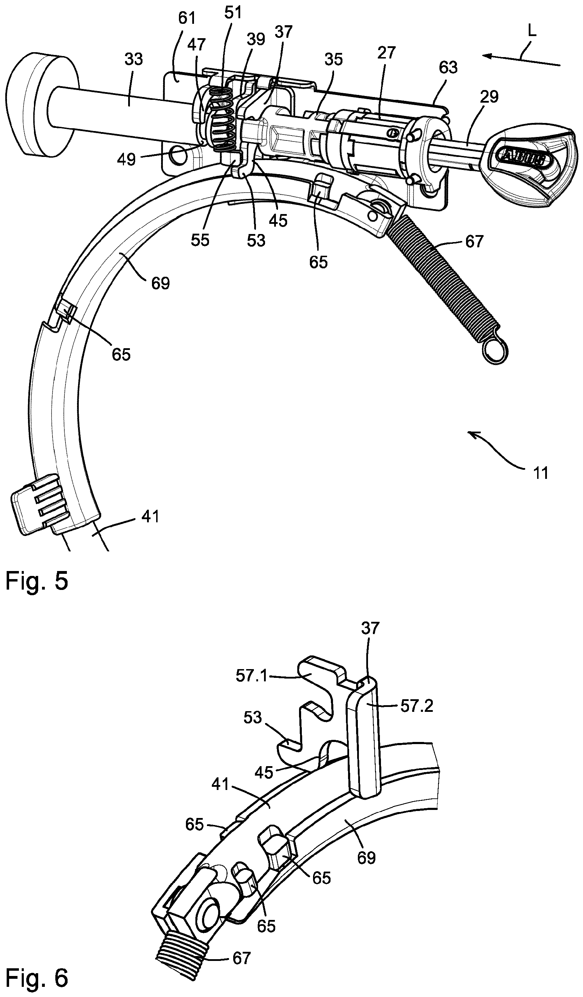

Der Hauptriegel 37 ist senkrecht zur Längsrichtung L zwischen einer in den Fig. 2 und 3 gezeigten Verriegelungsstellung und einer in den Fig. 5 und 6 gezeigten Entriegelungsstellung linear verstellbar. In der Verriegelungsstellung greift der Hauptriegel 37 mit einem Eingriffsabschnitt 45 in die Drehbügelaufnahme 43 ein. Dies ist insbesondere dann möglich, wenn sich der Drehbügel 41 in seiner Geschlossenstellung befindet. Der Eingriffsabschnitt 45 des Hauptriegels 37 wirkt in seiner Verriegelungsstellung dann mit einer Sperrstruktur des Drehbügels 41 derart zusammen, dass er den Drehbügel 41 gegen ein Verstellen in Richtung der Offenstellung sperrt, insbesondere indem der Eingriffsabschnitt 45 einen oder mehrere Anschlagabschnitte der Sperrstruktur des Drehbügels 41 bezüglich des Verlaufs der genannten Kreisbahn hintergreift. In der Entriegelungsstellung des Hauptriegels 37 dagegen greift der Eingriffsabschnitt 45 nicht oder höchstens so weit in die Drehbügelaufnahme 43 ein, dass der Drehbügel 41 zwischen seiner Geschlossenstellung und seiner Offenstellung verstellbar ist.

Wie insbesondere in Fig. 6 zu erkennen ist, weist der Eingriffsabschnitt 45 des Hauptriegels 37 bei der gezeigten Ausführungsform eine halbkreisförmige Kontur auf, mit welcher der Eingriffsabschnitt 45 in seiner Verriegelungsstellung den Drehbügel 41 in dessen Geschlossenstellung über etwa die Hälfte von dessen Umfang umgreift. Insofern ist der Eingriffsabschnitt 45 des Hauptriegels 37 gabelförmig ausgebildet. Dadurch kann der Eingriffsabschnitt 45 beidseitig des Drehbügels 41 - d.h. auf beiden Seiten einer durch die Kreisbahn, entlang welcher sich der Drehbügel 41 erstreckt, definierten Ebene - Stege 65 hintergreifen, die senkrecht zur Ebene der Kreisbahn von dem Drehbügel 41 vorstehen und Teil der genannten Sperrstruktur sind. Die genannten Anschlagabschnitte werden dabei durch senkrecht zum Verlauf der Kreisbahn ausgerichtete Stirnseiten der Stege 65 gebildet. Nur wenn sich der Hauptriegel 37, wie in Fig. 6 gezeigt, in seiner Entriegelungsstellung befindet, kann der Drehbügel 41 mit den Stegen 65 an dem Hauptriegel 37 vorbeigeführt und somit aus seiner Geschlossenstellung in seine Offenstellung verstellt werden.

Der Mitnehmer 35 ist als von der Schließeinrichtung 27 separates Bauteil ausgebildet und zu gemeinsamer Drehung mit dem Zylinderkern der Schließeinrichtung 27 gekoppelt (vgl. Fig. 3, 5 und 7). Über den Mitnehmer 35 ist auch der Hauptriegel 37 mit der Schließeinrichtung 27 gekoppelt und zwar derart, dass er durch eine Betätigung der Schließeinrichtung 27 mittels des Schlüssels 29 zwischen seiner Entriegelungsstellung und seiner Verriegelungsstellung verstellbar ist. Insbesondere besteht dabei ein eindeutiger Zusammenhang zwischen der jeweiligen Stellung des Hauptriegels 37 und der jeweiligen Drehstellung des Mitnehmers 35, des Zylinderkerns der Schließeinrichtung 27 und des Schlüssels 23. Der Verriegelungsstellung des Hauptriegels 37 entspricht dabei eine Normalstellung der Schließeinrichtung 27 bzw. des Schlüssels 23, und der Entriegelungsstellung des Hauptriegels 37 entspricht dabei eine Freigabestellung der Schließeinrichtung 27 bzw. des Schlüssels 23.

Der Klobenriegel 39 ist senkrecht zur Längsrichtung L und parallel zur Richtung der linearen Verstellbarkeit des Hauptriegels 37 zwischen einer in den Fig. 2, 3, 4 und 7 gezeigten Verriegelungsstellung und einer in Fig. 5 gezeigten Entriegelungsstellung linear verstellbar. In der Verriegelungsstellung greift der Klobenriegel 39 mit einem Eingriffsabschnitt 47 in die Klobenaufnahme 31 ein. Sofern der Kloben 33 eines dem Rahmenschloss 11 zugeordneten Sicherungselements in der Klobenaufnahme 31 aufgenommen ist, kann der Eingriffsabschnitt 47 des Klobenriegels 39 in seiner Verriegelungsstellung dann mit einer an dem Kloben 33 ausgebildeten Sperrstruktur, insbesondere in Form einer Ringnut 49, derart zusammenwirken, dass er den Kloben 33 gegen ein Verlassen der Klobenaufnahme 31 sperrt, insbesondere indem der Eingriffsabschnitt 47 in die Ringnut 49 eingreift und dadurch einen die Ringnut 49 seitlich begrenzenden Anschlagabschnitt bezüglich der Längsrichtung L hintergreift. In der Entriegelungsstellung des Klobenriegels 39 dagegen greift der Eingriffsabschnitt 47 nicht oder höchstens so weit in die Klobenaufnahme 31 ein, dass der Kloben 33 aus der Klobenaufnahme 31 entnommen werden kann.

Wie insbesondere in Fig. 4 zu erkennen ist, weist der Eingriffsabschnitt 47 des Klobenriegels 39 bei der gezeigten Ausführungsform eine teilkreisförmige Kontur auf, mit welcher der Eingriffsabschnitt 47 in seiner Verriegelungsstellung in die Ringnut 49 des Klobens 33 eingreift, so dass der Eingriffsabschnitt 47 über etwa die Hälfte, zumindest aber mehr als ein Viertel, vorzugsweise mehr als ein Drittel, des Umfangs der Ringnut 49 an der Ringnut 49 (nämlich an deren Boden) anliegt. Dadurch wird der Kloben 33 besonders zuverlässig durch den Klobenriegel 39 gesperrt.

In dem Schlosskörper 13 ist ferner eine Feder 51 in Form einer Schraubendruckfeder aufgenommen, die in den Fig. 3, 5 und 7 zu erkennen ist. Die Feder 51 ist nahezu parallel zur Richtung der linearen Verstellbarkeit des Hauptriegels 37 und des Klobenriegels 39 ausgerichtet und quer zu dieser Richtung sowie quer zur Längsrichtung L benachbart zum Klobenriegel 39 angeordnet. Dadurch ist die Feder 51 zwischen dem Klobenriegel 39 und einer Seitenwand des Gehäuses 15 gefangen, die den Schlosskörper 13 quer zur Längsrichtung L und quer zur Richtung der linearen Verstellbarkeit des Klobenriegels 39 begrenzt. In Fig. 1 ist diese Seitenwand, die in den Fig. 3, 5 und 7 nicht gezeigt ist, aus der Bildebene heraus weisend angeordnet. Die Feder 51 beaufschlagt den Klobenriegel 39 und spannt ihn dadurch in Richtung seiner Verriegelungsstellung vor. Aufgrund dieser Vorspannung wird der Klobenriegel 39 automatisch in seine Verriegelungsstellung verstellt, sofern er nicht durch den Kloben 33 oder den Hauptriegel 37 in eine andere Stellung gedrängt oder in einer anderen Stellung gehalten wird.

Der Hauptriegel 37 und der Klobenriegel 39 weisen jeweils einen Kopplungsabschnitt 53 bzw. 55 auf, der durch einen an dem Hauptriegel 37 bzw. an dem Klobenriegel 39 ausgebildeten Vorsprung gebildet wird, welcher quer zur Längsrichtung L und quer zur Richtung der linearen Verstellbarkeit des Hauptriegels 37 und des Klobenriegels 39 von dem Hauptriegel 37 bzw. dem Klobenriegel 39 vorsteht (vgl. Fig. 3 bis 7, insbesondere auch Fig. 4 und 6). Insbesondere stehen die Kopplungsabschnitte 53, 55 in diejenige Richtung vor, in welcher die Feder 51 zum Klobenriegel 39 benachbart angeordnet ist. Dadurch kann die Feder 51 den Kopplungsabschnitt 55 des Klobenriegels 39 unmittelbar beaufschlagen.

Eine bezüglich des übrigen Klobenriegels 39 distaler Teilabschnitt des Kopplungsabschnitts 55 des Klobenriegels 39 ist gegenüber einem proximalen Teilabschnitt derart umgebogen, dass der Kopplungsabschnitt 55 mit dem distalen Teilabschnitt auch parallel zur Längsrichtung L von dem übrigen Klobenriegel 39 vorsteht und zwar in Richtung zum Hauptriegel 37. Dadurch überlappen der Kopplungsabschnitt 55 des Klobenriegels 39 (nämlich dessen distaler Teilabschnitt) und der Kopplungsabschnitt 53 des Hauptriegels 37 bezüglich der Richtung der linearen Verstellbarkeit des Hauptriegels 37 und des Klobenriegels 39. Der Kopplungsabschnitt 55 des Klobenriegels 39 ist dabei gegenüber dem Kopplungsabschnitt 53 des Hauptriegels 37 in diejenige Richtung versetzt angeordnet, in welche der Hauptriegel 37 und der Klobenriegel 39 aus ihrer jeweiligen Verriegelungsstellung in ihre jeweilige Entriegelungsstellung verstellbar sind. Das hat zur Folge, dass der Kopplungsabschnitt 53 des Hauptriegels 37 den Kopplungsabschnitt 55 des Klobenriegels 39 beaufschlagt, wenn der Hauptriegel 37 in Richtung seiner Entriegelungsstellung verstellt wird, und der Kopplungsabschnitt 55 des Klobenriegels 39 den Kopplungsabschnitt 53 des Hauptriegels 37 beaufschlagt, wenn der Klobenriegel 39 in Richtung seiner Verriegelungsstellung verstellt wird.

Durch das Zusammenwirken der Kopplungsabschnitte 53, 55 des Hauptriegels 37 und des Klobenriegels 39 sind der Hauptriegel 37 und der Klobenriegel 39 derart miteinander gekoppelt, dass einerseits der Klobenriegel 39 über den Hauptriegel 37 von der Schließeinrichtung 27 in seine Entriegelungsstellung verstellt werden kann und andererseits der Hauptriegel 37 über den Klobenriegel 39 von der Feder 51 in Richtung seiner Verriegelungsstellung vorgespannt ist, nämlich in die in Fig. 7 gezeigte Teilverriegelungsstellung, die zwischen der Entriegelungsstellung und der Verriegelungsstellung des Hauptriegels 37 liegt. Aufgrund dieser Kopplung wird eine Betätigung des Schlüssels 29 aus der Normalstellung in die Freigabestellung über den Zylinderkern der Schließeinrichtung 27, den Mitnehmer 35 und den Hauptriegel 37 letztlich bis auf den Klobenriegel 39 übertragen, der dadurch gegen die Vorspannung der Feder 51 in seine Entriegelungsstellung verstellt wird und den Kloben 33 freigibt. In umgekehrter Richtung spannt die Feder 51 nicht nur den Klobenriegel 39 in seine Verriegelungsstellung vor, sondern über den Klobenriegel 39 auch den Hauptriegel 37 in die genannte Teilverriegelungsstellung und über den Hauptriegel 37 und den Mitnehmer 35 auch den Zylinderkern der Schließeinrichtung 27 mitsamt dem darin eingesteckten Schlüssel 29 in Richtung der Normalstellung vor, nämlich in eine zwischen der Normalstellung und der Freigabestellung liegende Drehstellung (vgl. Fig. 7), die der Teilverriegelungsstellung des Hauptriegels 37 entspricht.

Der Hauptriegel 37 und der Klobenriegel 39 sind jeweils als ein gestanztes Blechteil ausgebildet. Der Hauptriegel 37 ist dabei derart entlang einer Biegekante umgebogen, dass er bezüglich der Richtung seiner linearen Verstellbarkeit zumindest im Wesentlichen einen Querschnitt mit einer L-Form aufweist (vgl. Fig. 6). Der längere erste Schenkel der L-Form entspricht einer ersten Seitenfläche 57.1 des Hauptriegels 37, die senkrecht zur Längsrichtung L ausgerichtet ist, und der kürzere zweite Schenkel der L-Form entspricht einer zweiten Seitenfläche 57.2 des Hauptriegels 37, die parallel zur Längsrichtung L ausgerichtet ist. Sowohl der genannte Eingriffsabschnitt 45 als auch der genannte Kopplungsabschnitt 53 des Hauptriegels 37 sind an der ersten Seitenfläche 57.1 des Hauptriegels 37 ausgebildet.

Der Klobenriegel 39 ist derart entlang zweier Biegekanten umgebogen, dass er bezüglich der Richtung seiner linearen Verstellbarkeit zumindest im Wesentlichen einen Querschnitt mit einer U-Form aufweist (vgl. Fig. 4). Die beiden Schenkel der U-Form entsprechen einer ersten Seitenfläche 59.1 bzw. einer zweiten Seitenfläche 59.2 des Klobenriegels 39, die jeweils senkrecht zur Längsrichtung L ausgerichtet sind. Der die beiden Schenkel verbindende mittlere Abschnitt der U-Form entspricht einer dritten Seitenfläche 59.3 des Klobenriegels 39, die parallel zur Längsrichtung L ausgerichtet ist. Der genannte Kopplungsabschnitt 55 des Klobenriegels 39 ist an der ersten Seitenfläche 59.1 des Klobenriegels 39 ausgebildet, während der genannte Eingriffsabschnitt 47 des Klobenriegels 39 an der zweiten Seitenfläche 59.2 des Klobenriegels 39 ausgebildet ist.

Die beiden zur Längsrichtung L parallelen Seitenflächen, nämlich die zweite Seitenfläche 57.2 des Hauptriegels 37 und die dritte Seitenfläche 59.3 des Klobenriegels 39, liegen an einer Innenwand 61 an, die durch eine Innenseite eines in dem Schlosskörper 13 aufgenommenen Schutzblechs 63 gebildet wird (vgl. Fig. 3, 5 und 7). Durch das Anliegen gleiten der Hauptriegel 37 und der Klobenriegel 39 bei einem Verstellen an der Innenwand 61 entlang und werden dadurch geführt. Auf diese Weise kann ein Verkanten des Hauptriegels 37 bzw. des Klobenriegels 39 besonders zuverlässig vermieden werden.

In dem in Fig. 3 gezeigten geschlossenen Zustand des Rahmenschlosses 11 befindet sich der Drehbügel 41 in seiner Geschlossenstellung und befinden sich der Hauptriegel 37 und der Klobenriegel 39 jeweils in ihrer Verriegelungsstellung, so dass der Drehbügel 41 gegen ein Verstellen aus seiner Geschlossenstellung gesperrt ist und der in die Klobenaufnahme 31 aufgenommene Kloben 33 gegen ein Verlassen der Klobenaufnahme 31 gesperrt ist. Durch Drehen des Schlüssels 29 aus der in Fig. 3 gezeigten Normalstellung, in welcher der Schüssel 29 in die Schließeinrichtung 27 eingesteckt und von der Schließeinrichtung 27 abgezogen werden kann, in die in Fig. 5 gezeigte Freigabestellung, in welcher der Schlüssel 29 in der Schließeinrichtung 27 gefangen ist, wird der Hauptriegel 37 über den Mitnehmer 35 in seine in Fig. 5 gezeigte Entriegelungsstellung verstellt.

Beim Verstellen des Hauptriegels 37 in seine Entriegelungsstellung trifft der Kopplungsabschnitt 53 des Hauptriegels 37 auf den Kopplungsabschnitt 55 des Klobenriegels 39 und beaufschlagt diesen dann derart, dass auch der Klobenriegel 39 in seine in Fig. 5 gezeigte Entriegelungsstellung verstellt wird und zwar gegen die Vorspannung der Feder 51. Infolgedessen greift der Eingriffsabschnitt 47 des Klobenriegels 39 nicht länger in die Ringnut 49 des Klobens 33 ein, so dass der Kloben 33 aus der Klobenaufnahme 31 entnommen werden kann.

Dadurch, dass der Hauptriegel 37 in seine Entriegelungsstellung verstellt wird, ist auch der Drehbügel 41 nicht länger durch Eingriff des Eingriffsabschnitts 45 des Hauptriegels 37 gegen ein Verstellen in Richtung seiner Offenstellung gesperrt. Vorzugsweise ist der Drehbügel 41 über eine als Schraubenzugfeder ausgebildete Feder 67 in die Offenstellung vorgespannt, so dass der Drehbügel 41 aufgrund dieser Vorspannung dann automatisch in die Offenstellung verstellt wird. In dem in den Fig. 5 und 6 gezeigten Zwischenzustand des Rahmenschlosses 11 hat der Drehbügel 41 seine Offenstellung allerdings noch nicht erreicht. Während des Verstellens des Drehbügels 41 zwischen seiner Offenstellung und seiner Geschlossenstellung werden der Hauptriegel 37 und indirekt über den Hauptriegel 37 auch der Klobenriegel 39 durch eine Leiste 69, die als eine Art Abdeckung an dem Drehbügel 41 angeordnet ist und sich insbesondere zwischen zwei in dieselbe Richtung von dem Drehbügel 41 vorstehenden Stegen 65 des Drehbügels 41 erstreckt (vgl. Fig. 5), in ihrer jeweiligen Entriegelungsstellung gehalten.

Mit Erreichen der Offenstellung des Drehbügels 41 werden der Hauptriegel 37 und der Klobenriegel 39 nicht länger von der Leiste 69 in ihrer jeweiligen Entriegelungsstellung gehalten. Daher wird der Klobenriegel 39 dann durch die Vorspannung der Feder 51 in seine Verriegelungsstellung verstellt, wodurch aufgrund der Kopplung über die Kopplungsabschnitte 53, 55 auch der Hauptriegel 37 in Richtung seiner Verriegelungsstellung verstellt wird. Da der Klobenriegel 39 nicht über seine Verriegelungsstellung hinaus verstellt werden kann, wirkt die Vorspannung der Feder 51 über den Klobenriegel 39 nur so weit auch auf den Hauptriegel 37, bis der Klobenriegel 39 seine Verriegelungsstellung erreicht hat. Der Hauptriegel 37 wird dabei lediglich bis in seine Teilverriegelungsstellung verstellt, in welcher der Hauptriegel 37 mit seinem Eingriffsabschnitt 45 bereits teilweise in die Drehbügelaufnahme 43 eingreift und einen Steg 65 des Drehbügels 41 bereits derart hintergreift, dass dadurch der Drehbügel 41 in seiner Offenstellung gesichert ist. Dieser offene Zustand des Rahmenschlosses 11 ist in Fig. 7 gezeigt.

Grundsätzlich kann in diesem Zustand der Hauptriegel 37 noch bis in seine Verriegelungsstellung verstellbar sein, nämlich manuell durch Drehen des Schlüssels 29 in die Normalstellung. Bei der gezeigten Ausführungsform ist die Leiste 69 allerdings derart ausgebildet, dass sie, wenn sie sich zusammen mit dem Drehbügel 41 in dessen Offenstellung befindet, die lineare Verstellbarkeit des Hauptriegels 37 auf ein Verstellen zwischen der Entriegelungsstellung und der genannten Teilverriegelungsstellung beschränkt. Der Hauptriegel 37 kann in der Offenstellung des Drehbügels 41 also in Richtung der Verriegelungsstellung nicht über die Teilverriegelungsstellung hinaus verstellt werden. Insbesondere ist es daher auch nicht möglich, den Schlüssel 29 in diesem Zustand aus der in Fig. 7 gezeigten Zwischenstellung in die Normalstellung zu drehen. Auf diese Weise wird im Sinne einer Key-Retaining-Funktion sichergestellt, dass der Schlüssel 29 ausschließlich im geschlossenen Zustand des Rahmenschlosses 11 von der Schließeinrichtung 27 abgezogen werden kann.

Zum Schließen des Rahmenschlosses 11 kann der Schlüssel 29 in die Freigabestellung gedreht werden, wodurch der Hauptriegel 37 und der Klobenriegel 39 in ihre jeweilige Entriegelungsstellung verstellt werden und der Drehbügel 41 dann gegen die Vorspannung der Feder 67 in seine Geschlossenstellung verstellt werden kann. In der Geschlossenstellung des Drehbügels 41 drängt die Vorspannung der Feder 51 den Klobenriegel 39 in seine Verriegelungsstellung und über den Klobenriegel 39 auch den Hauptriegel 37 bis in dessen Teilverriegelungsstellung. Zudem kann in der Geschlossenstellung des Drehbügels 41 durch Drehen des Schlüssels 29 in die Normalstellung der Hauptriegel 37 über die Teilverriegelungsstellung hinaus bis in seine Verriegelungsstellung verstellt werden, so dass das Rahmenschlosses 11 dann wieder seinen geschlossenen Zustand einnimmt und der Schlüssel 29 von dem Rahmenschloss 11 abgezogen werden kann.

Dadurch, dass bei Erreichen der Geschlossenstellung des Drehbügels 41 die Vorspannung der Feder 51 über den Klobenriegel 39 den Hauptriegel 37 in seine Teilverriegelungsstellung verstellt, wird der Drehbügel 41 automatisch dagegen gesichert, von der Feder 67 zurück in die Offenstellung verstellt zu werden. Das ermöglicht ein Schließen des Rahmenschlosses 11 mit nur einer Hand, da der Drehbügel 41 nach den Verstellen in die Offenstellung losgelassen werden kann, bevor anschließend der Schlüssel 29 in seine Normalstellung gedreht wird, um den Hauptriegel 37 bis in seine Verriegelungsstellung zu verstellen und den Drehbügel 41 dadurch vollständig zu verriegeln.

Dabei ist es sowohl in dem offenen Zustand als auch im geschlossenen Zustand des Rahmenschlosses 11 (sowie in Zuständen dazwischen) jeweils möglich, den Kloben 33 in die Klobenaufnahme 31 einzustecken. Denn der Klobenriegel 39 wird, wenn er sich nicht ohnehin in seiner Entriegelungsstellung befindet, lediglich durch die Vorspannung der Feder 51 in seiner Verriegelungsstellung gehalten. Daher kann der Klobenriegel 39, wenn er sich in seiner Verriegelungsstellung befindet, stets, insbesondere unabhängig von der jeweiligen Stellung des Hauptriegels 37 gegen die Vorspannung der Feder 51 in seine Entriegelungsstellung verstellt werden und zwar vorteilhafterweise direkt durch das Einstecken des Klobens 33 in die Klobenaufnahme 31.

Dazu kann insbesondere vorgesehen sein, dass sich (wie in dem gezeigten Beispiel) in einem Endabschnitt des Klobens 33, insbesondere einem Abschnitt zwischen der Ringnut 49 und einem freien Ende des Klobens 33, der Durchmesser des Klobens 33 derart in Richtung zum freien Ende verringert, dass eine, insbesondere konische, Anlaufschräge ausgebildet wird. Die Anlaufschräge ist dabei derart ausgebildet, dass bei einem Einführen des Klobens 33 in die Klobenaufnahme 31 entlang der Längsrichtung L der Klobenriegel 39 durch die Anlaufschräge quer zur Längsrichtung L aus seiner Verriegelungsstellung in Richtung seiner Entriegelungsstellung zurückgedrängt wird, so dass der Endabschnitt an dem Klobenriegel 39 vorbeigeführt werden kann. Anschließend kann der Klobenriegel 39 durch die Vorspannung der Feder 51 an dem Kloben 33, insbesondere in dessen Ringnut 49, einrastend wieder in seine Verriegelungsstellung zurück verstellt werden.

Auf diese Weise kann der Kloben 33 stets einfach und komfortabel an dem Rahmenschloss 11 eingesteckt werden und anschließend automatisch in der Klobenaufnahme 31 gesichert sein - sei es bei geschlossenem Rahmenschloss 11, um nicht nur ein jeweiliges Rad des Zweirads mittels des Drehbügels 41 zu sperren, sondern das gesamte Zweirad mittels des Sicherungselements, an dem der Kloben 33 vorgesehen ist, an einem stationären Gegenstand anzuschließen, oder bei offenem Rahmenschloss 11, um den Kloben 33 einstecken zu können und die Hände dann für das Schließen und Verriegeln des Drehbügels 41 frei zu haben.

### Bezugszeichen

- 11: Rahmenschloss
- 13: Schlosskörper
- 15: Gehäuse
- 17: erster Schenkel
- 19: zweiter Schenkel
- 21: erstes Ende
- 23: zweites Ende
- 25: Zylinderaufnahme
- 27: Schließeinrichtung
- 29: Schlüssel
- 31: Klobenaufnahme
- 33: Kloben
- 35: Mitnehmer
- 37: Hauptriegel
- 39: Klobenriegel
- 41: Drehbügel
- 43: Drehbügelaufnahme
- 45: Eingriffsabschnitt des Hauptriegels
- 47: Eingriffsabschnitt des Klobenriegels
- 49: Ringnut
- 51: Feder
- 53: Kopplungsabschnitt des Hauptriegels
- 55: Kopplungsabschnitt des Klobenriegels
- 57: Seitenfläche des Hauptriegels
- 59: Seitenfläche des Klobenriegels
- 61: Innenwand
- 63: Schutzblech
- 65: Steg
- 67: Feder
- 69: Leiste
- L: Längsrichtung

## Patentansprüche

1. Rahmenschloss (11) für ein Zweirad umfassend:
- einen Schlosskörper (13), der sich von einem ersten Ende (21), an dem er eine Zylinderaufnahme (25) aufweist, in eine Längsrichtung (L) zu einem zweiten Ende (23), an dem er eine Klobenaufnahme (31) aufweist, erstreckt und eine Drehbügelaufnahme (43) aufweist;
- einen Drehbügel (41), der zumindest teilweise in der Drehbügelaufnahme (43) aufgenommen und zwischen einer Offenstellung, in der er ein Rad des Zweirads für eine Drehung freigibt, und einer Geschlossenstellung, in der er das Rad gegen Drehung sperrt, verstellbar ist;
- einen Hauptriegel (37), der quer zur Längsrichtung (L) zwischen einer Verriegelungsstellung, in der er zum Sperren des Drehbügels (41) zumindest in dessen Geschlossenstellung mit einem Eingriffsabschnitt (45) in die Drehbügelaufnahme (43) eingreift, und einer Entriegelungsstellung, in der er den Drehbügel (41) für ein Verstellen freigibt, linear verstellbar ist;
- eine Schließeinrichtung (27), die in der Zylinderaufnahme (25) aufgenommen ist und einen Mitnehmer (35) aufweist, über den sie derart mit dem Hauptriegel (37) gekoppelt ist, dass der Hauptriegel (37) über den Mitnehmer (35) von der Schließeinrichtung (27) in seine Entriegelungsstellung verstellbar ist;
- einen Klobenriegel (39), der quer zur Längsrichtung (L) zwischen einer Verriegelungsstellung, in der er zum Sperren eines in die Klobenaufnahme (31) aufgenommenen Klobens (33) mit einem Eingriffsabschnitt (47) in die Klobenaufnahme (31) eingreift, und einer Entriegelungsstellung, in der er den Kloben (33) für ein Verlassen der Klobenaufnahme (31) freigibt, linear verstellbar ist; und
- eine Feder (51), die den Klobenriegel (39) in Richtung seiner Verriegelungsstellung vorspannt;
wobei
ein Kopplungsabschnitt (53) des Hauptriegels (37) und ein Kopplungsabschnitt (55) des Klobenriegels (39) derart, insbesondere unmittelbar, miteinander gekoppelt sind, dass
- einerseits der Klobenriegel (39) über den Hauptriegel (37) von der Schließeinrichtung (27) in seine Entriegelungsstellung verstellbar ist und **dadurch gekennzeichnet, dass**
- andererseits der Hauptriegel (37) über den Klobenriegel (39) von der Feder (51) in Richtung seiner Verriegelungsstellung vorgespannt ist.

2. Rahmenschloss nach Anspruch 1,
wobei der Klobenriegel (39) bezüglich der Richtung seiner linearen Verstellbarkeit einen Querschnitt mit einer U-Form aufweist, deren zwei Schenkel vorzugsweise quer zur Längsrichtung verlaufend ausgerichtet sind.

3. Rahmenschloss nach Anspruch 1 oder 2,
wobei der genannte Kopplungsabschnitt (55) des Klobenriegels (39) an einer ersten Seitenfläche (59.1) des Klobenriegels (39) ausgebildet ist, wobei der genannte Eingriffsabschnitt (47) des Klobenriegels (39) an einer zweiten Seitenfläche (59.2) des Klobenriegels (39) ausgebildet ist, und wobei der Klobenriegel (39) eine dritte Seitenfläche (59.3) aufweist, welche die erste Seitenfläche (59.1) und die zweite Seitenfläche (59.2) verbindet und an einer Innenwand (61) des Schlosskörpers (13) flächig anliegt.

4. Rahmenschloss nach einem der vorstehenden Ansprüche,
wobei der Hauptriegel (37) bezüglich der Richtung seiner linearen Verstellbarkeit einen Querschnitt mit einer L-Form aufweist.

5. Rahmenschloss nach einem der vorstehenden Ansprüche,
wobei der genannte Kopplungsabschnitt (53) des Hauptriegels (37) und der genannte Eingriffsabschnitt (45) des Hauptriegels (37) an einer ersten Seitenfläche (57.1) des Hauptriegels (37) ausgebildet sind, und
wobei der Hauptriegel (37) eine zweite Seitenfläche (57.2) aufweist, welche an die erste Seitenfläche (57.1) angrenzt und an einer Innenwand (61) des Schlosskörpers (13) flächig anliegt.

6. Rahmenschloss nach einem der vorstehenden Ansprüche,
wobei die Richtung der linearen Verstellbarkeit des Hauptriegels (37) und die Richtung der linearen Verstellbarkeit des Klobenriegels (39) parallel zueinander sind.

7. Rahmenschloss nach einem der vorstehenden Ansprüche,
wobei die Feder (51) in einer Querrichtung, die einerseits zur genannten Längsrichtung (L) sowie andererseits zur Richtung der linearen Verstellbarkeit des Klobenriegels (39) und/oder zur Richtung der linearen Verstellbarkeit des Hauptriegels (37) senkrecht ist, benachbart zum Klobenriegel (39) und/oder zum Hauptriegel (37) angeordnet ist.

8. Rahmenschloss nach einem der vorstehenden Ansprüche,
wobei die Feder (51) zumindest im Wesentlichen parallel zur Richtung der linearen Verstellbarkeit des Klobenriegels (39) ausgerichtet ist.

9. Rahmenschloss nach einem der vorstehenden Ansprüche,
wobei die Feder (51) den Kopplungsabschnitt (55) des Klobenriegels (39) beaufschlagt.

10. Rahmenschloss nach einem der vorstehenden Ansprüche,
wobei der Kopplungsabschnitt (55) des Klobenriegels (39) durch einen an dem Klobenriegel (39) ausgebildeten Vorsprung gebildet wird, der vorzugsweise quer zur genannten Längsrichtung (L) und quer zur Richtung der linearen Verstellbarkeit des Klobenriegels (39) von dem Klobenriegel (39) vorsteht.

11. Rahmenschloss nach einem der vorstehenden Ansprüche,
wobei der Kopplungsabschnitt (53) des Hauptriegels (37) durch einen an dem Hauptriegel (37) ausgebildeten Vorsprung gebildet wird, der vorzugsweise quer zur genannten Längsrichtung (L) und quer zur Richtung der linearen Verstellbarkeit des Hauptriegels (37) von dem Hauptriegel (37) vorsteht.

12. Rahmenschloss nach einem der vorstehenden Ansprüche,
wobei der Kopplungsabschnitt (53) des Hauptriegels (37) und der Kopplungsabschnitt (55) des Klobenriegels (39) aneinander anliegen, wenn sich der Hauptriegel (37) und der Klobenriegel (39) in ihrer jeweiligen Entriegelungsstellung befinden,
und/oder
wobei der Kopplungsabschnitt (53) des Hauptriegels (37) und der Kopplungsabschnitt (55) des Klobenriegels (39) aneinander anliegen, wenn sich der Klobenriegel (39) in seiner Verriegelungsstellung befindet und sich der Hauptriegel (37) in einer Teilverriegelungsstellung zwischen seiner Entriegelungsstellung und seiner Verriegelungsstellung befindet.

## Claims

1. A frame lock (11) for a two-wheeler, said frame lock (11) comprising:
- a lock body (13) that extends in a longitudinal direction (L) from a first end (21), at which it has a cylinder receiver (25), to a second end (23), at which it has a bolt receiver (31), and that has a rotary hoop receiver (43);
- a rotary hoop (41) that is at least partly received in the rotary hoop receiver (43) and that is adjustable between an open position, in which said rotary hoop (41) releases a wheel of the two-wheeler for a rotation, and a closed position in which said rotary hoop (41) blocks the wheel against rotation;
- a main latch (37) that is linearly adjustable transversely to the longitudinal direction (L) between a locked position, in which said main latch (37) engages with an engagement section (45) into the rotary hoop receiver (43) to block the rotary hoop (41) at least in its closed position, and an unlocked position in which said main latch (37) releases the rotary hoop (41) for an adjustment;
- a locking device (27) that is received in the cylinder receiver (25) and that has an entrainer (35) via which it is coupled to the main latch (37) such that the main latch (37) can be adjusted into its unlocked position by the locking device (27) via the entrainer (35);
- a bolt latch (39) that is linearly adjustable transversely to the longitudinal direction (L) between a locked position, in which said bolt latch (39) engages with an engagement section (47) into the bolt receiver (31) to block a bolt (33) received in the bolt receiver (31), and an unlocked position in which said bolt latch (39) releases the bolt (33) for a departure from the bolt receiver (31); and
- a spring (51) that preloads the bolt latch (39) in the direction of its locked position,
wherein
a coupling section (53) of the main latch (37) and a coupling section (55) of the bolt latch (39) are coupled to one another, in particular directly, such that,
- on the one hand, the bolt latch (39) can be adjusted into its unlocked position by the locking device (27) via the main latch (37), and
**characterized in that**,
- on the other hand, the main latch (37) is preloaded in the direction of its locked position by the spring (51) via the bolt latch (39).

2. A frame lock according to claim 1,
wherein the bolt latch (39) has a cross-section having a U shape with respect to the direction of its linear adjustability, the two limbs of said U shape preferably being oriented extending transversely to the longitudinal direction.

3. A frame lock according to claim 1 or 2,
wherein said coupling section (55) of the bolt latch (39) is formed at a first side surface (59.1) of the bolt latch (39),
wherein said engagement section (47) of the bolt latch (39) is formed at a second side surface (59.2) of the bolt latch (39), and
wherein the bolt latch (39) has a third side surface (59.3) which connects the first side surface (59.1) and the second side surface (59.2) and which areally contacts an inner wall (61) of the lock body (13).

4. A frame lock according to any one of the preceding claims,
wherein the main latch (37) has a cross-section having an L shape with respect to the direction of its linear adjustability.

5. A frame lock according to any one of the preceding claims,
wherein said coupling section (53) of the main latch (37) and said engagement section (45) of the main latch (37) are formed at a first side surface (57.1) of the main latch (37), and
wherein the main latch (37) has a second side surface (57.2) which adjoins the first side surface (57.1) and which areally contacts an inner wall (61) of the lock body (13).

6. A frame lock according to any one of the preceding claims,
wherein the direction of the linear adjustability of the main latch (37) and the direction of the linear adjustability of the bolt latch (39) are in parallel with one another.

7. A frame lock according to any one of the preceding claims,
wherein the spring (51) is arranged adjacent to the bolt latch (39) and/or to the main latch (37) in a transverse direction that is perpendicular to said longitudinal direction (L), on the one hand, and to the direction of the linear adjustability of the bolt latch (39) and/or to the direction of the linear adjustability of the main latch (37), on the other hand.

8. A frame lock according to any one of the preceding claims,
wherein the spring (51) is aligned at least substantially in parallel with the direction of the linear adjustability of the bolt latch (39).

9. A frame lock according to any one of the preceding claims,
wherein the spring (51) acts on the coupling section (55) of the bolt latch (39).

10. A frame lock according to any one of the preceding claims,
wherein the coupling section (55) of the bolt latch (39) is formed by a projection which is formed at the bolt latch (39) and which preferably projects from the bolt latch (39) transversely to said longitudinal direction (L) and transversely to the direction of the linear adjustability of the bolt latch (39).

11. A frame lock according to any one of the preceding claims,
wherein the coupling section (53) of the main latch (37) is formed by a projection which is formed at the main latch (37) and which preferably projects from the main latch (37) transversely to said longitudinal direction (L) and transversely to the direction of the linear adjustability of the main latch (37).

12. A frame lock according to any one of the preceding claims,
wherein the coupling section (53) of the main latch (37) and the coupling section (55) of the bolt latch (39) contact one another when the main latch (37) and the bolt latch (39) are in their respective unlocked positions, and/or
wherein the coupling section (53) of the main latch (37) and the coupling section (55) of the bolt latch (39) contact one another when the bolt latch (39) is in its locked position and the main latch (37) is in a partly locked position between its unlocked position and its locked position.

## Revendications

1. Antivol de cadre (11) pour un deux-roues, comprenant :
- un corps d'antivol (13) qui s'étend dans une direction longitudinale (L) depuis une première extrémité (21), au niveau de laquelle il présente un logement de cylindre (25), jusqu'à une deuxième extrémité (23), au niveau de laquelle il présente un logement de gond (31), et qui présente un logement d'étrier rotatif (43) ;
- un étrier rotatif (41) qui est reçu au moins partiellement dans le logement d'étrier rotatif (43) et qui peut être déplacé entre une position ouverte, dans laquelle il libère une roue du deux-roues pour une rotation, et une position fermée, dans laquelle il bloque la roue à l'encontre d'une rotation ;
- un verrou principal (37) qui peut être déplacé linéairement, transversalement à la direction longitudinale (L), entre une position verrouillée, dans laquelle il s'engage dans le logement d'étrier rotatif (43) par une portion d'engagement (45) afin de bloquer l'étrier rotatif (41) au moins dans sa position fermée, et une position déverrouillée, dans laquelle il libère l'étrier rotatif (41) pour un déplacement ;
- un dispositif de fermeture (27) qui est reçu dans le logement de cylindre (25) et qui présente un entraîneur (35) par lequel il est couplé au verrou principal (37) de telle sorte que le verrou principal (37) peut être déplacé vers sa position déverrouillée par le dispositif de fermeture (27) par l'intermédiaire de l'entraîneur (35) ;
- un verrou de gond (39) qui peut être déplacé linéairement, transversalement à la direction longitudinale (L), entre une position verrouillée, dans laquelle il s'engage dans le logement de gond (31) par une portion d'engagement (47) afin de bloquer un gond (33) reçu dans le logement de gond (31), et une position déverrouillée, dans laquelle il libère le gond (33) pour qu'il quitte le logement de gond (31) ; et
- un ressort (51) par lequel le verrou de gond (39) est précontraint en direction de sa position verrouillée ;
dans lequel
une portion d'accouplement (53) du verrou principal (37) et une portion d'accouplement (55) du verrou de gond (39) sont accouplées l'une à l'autre, en particulier directement, de telle sorte que
- d'une part, le verrou de gond (39) peut être déplacé vers sa position déverrouillée par le dispositif de fermeture (27) par l'intermédiaire du verrou principal (37),
**caractérisé en ce que**
- d'autre part, le verrou principal (37) est précontraint en direction de sa position verrouillée par le ressort (51) par l'intermédiaire du verrou de gond (39).

2. Antivol de cadre selon la revendication 1,
dans lequel le verrou de gond (39) présente, par rapport à la direction de son déplacement linéaire, une section transversale en forme de U dont les deux branches sont orientées de préférence transversalement à la direction longitudinale.

3. Antivol de cadre selon la revendication 1 ou 2,
dans lequel ladite portion d'accouplement (55) du verrou de gond (39) est formée sur une première face latérale (59.1) du verrou de gond (39),
ladite portion d'engagement (47) du verrou de gond (39) est formée sur une deuxième face latérale (59.2) du verrou de gond (39), et
le verrou de gond (39) présente sur une troisième face latérale (59.3) qui relie la première face latérale (59.1) et la deuxième face latérale (59.2) et qui s'applique à plat contre une paroi intérieure (61) du corps d'antivol (13).

4. Antivol de cadre selon l'une des revendications précédentes,
dans lequel le verrou principal (37) présente, par rapport à la direction de son déplacement linéaire, une section transversale en forme de L.

5. Antivol selon l'une des revendications précédentes,
dans lequel ladite portion d'accouplement (53) du verrou principal (37) et ladite portion d'engagement (45) du verrou principal (37) sont formées sur une première face latérale (57.1) du verrou principal (37), et
le verrou principal (37) présente une deuxième face latérale (57.2) qui est adjacente à la première face latérale (57.1) et qui s'applique à plat contre une paroi intérieure (61) du corps d'antivol (13).

6. Antivol de cadre selon l'une des revendications précédentes,
dans lequel la direction du déplacement linéaire du verrou principal (37) et la direction du déplacement linéaire du verrou de gond (39) sont parallèles entre elles.

7. Antivol de cadre selon l'une des revendications précédentes,
dans lequel le ressort (51) est disposé au voisinage du verrou de gond (39) et/ou du verrou principal (37) dans une direction transversale qui est perpendiculaire, d'une part, à ladite direction longitudinale (L) et, d'autre part, à la direction du déplacement linéaire du verrou de gond (39) et/ou à la direction du déplacement linéaire du verrou principal (37).

8. Antivol de cadre selon l'une des revendications précédentes,
dans lequel le ressort (51) est orienté au moins sensiblement parallèlement à la direction du déplacement linéaire du verrou de gond (39).

9. Antivol de cadre selon l'une des revendications précédentes,
dans lequel le ressort (51) sollicite la portion d'accouplement (55) du verrou de gond (39).

10. Antivol de cadre selon l'une des revendications précédentes,
dans lequel la portion d'accouplement (55) du verrou de gond (39) est formée par une saillie formée sur le verrou de gond (39), qui, de préférence, fait saillie du verrou de gond (39) transversalement à ladite direction longitudinale (L) et transversalement à la direction du déplacement linéaire du verrou de gond (39).

11. Antivol de cadre selon l'une des revendications précédentes,
dans lequel la portion d'accouplement (53) du verrou principal (37) est formée par une saillie formée sur le verrou principal (37), qui, de préférence, fait saillie du verrou principal (37) transversalement à ladite direction longitudinale (L) et transversalement à la direction du déplacement linéaire du verrou principal (37).

12. Antivol de cadre selon l'une des revendications précédentes,
dans lequel la portion d'accouplement (53) du verrou principal (37) et la portion d'accouplement (55) du verrou de gond (39) sont en appui l'une contre l'autre lorsque le verrou principal (37) et le verrou de gond (39) sont dans leur position déverrouillée respective,
et/ou
la portion d'accouplement (53) du verrou principal (37) et la portion d'accouplement (55) du verrou de gond (39) sont en appui l'une contre l'autre lorsque le verrou de gond (39) se trouve dans sa position verrouillée et que le verrou principal (37) se trouve dans une position de verrouillage partiel entre sa position déverrouillée et sa position verrouillée.
